# EUROPEAN PATENT SPECIFICATION

(11) **EP 3 735 040 B1**
(45) Date of publication and mention of the grant of the patent: **19.04.2023**
(21) Application number: 18894056.3
(22) Date of filing: 23.11.2018
(51) Int. Cl.: H04J 11/00, H04W 72/12, H04W 76/28, H04W 88/06

(54) **INTERFERENCE PROCESSING METHOD, USER TERMINAL AND NETWORK SIDE DEVICE**
INTERFERENZVERARBEITUNGSVERFAHREN, BENUTZERENDGERÄT UND NETZWERKSEITIGE VORRICHTUNG
PROCÉDÉ DE TRAITEMENT D'INTERFÉRENCE, TERMINAL UTILISATEUR ET DISPOSITIF CÔTÉ RÉSEAU

(30) Priority: 29.12.2017 CN 201711474602
(43) Date of publication of application: 04.11.2020
(73) Proprietor: Vivo Mobile Communication Co., Ltd., Dongguan, Guangdong 523860 (CN)
(72) Inventor: WU, Yumin, Dongguan, Guangdong 523860 (CN); ZHANG, Yanxia, Dongguan, Guangdong 523860 (CN)
(74) Representative: Lavoix
(86) International application number: PCT/CN2018/117148
(87) International publication number: WO 2019/128579

(56) References cited:
- EP-A1- 2 887 740
- WO-A1-2014/000244
- WO-A1-2017/219825
- CN-A- 105 743 824
- CN-A- 105 766 049
- CN-A- 106 797 266
- US-A1- 2014 038 621
- US-A1- 2014 050 177
- US-A1- 2014 141 825
- US-A1- 2015 230 286
- US-A1- 2016 234 852

## Description

### TECHNICAL FIELD

The present disclosure relates to the field of communication technology, in particular to interference processing methods, a user terminal, and a network-side device.

### BACKGROUND

In-Device Coexistence (IDC) means that a user terminal supports a plurality of different wireless transceivers, such as a Long Term Evolution (LTE) wireless transceiver, a Fifth Generation (5G) wireless transceiver, a Wireless-Fidelity (WIFI) wireless transceiver, a Bluetooth wireless transceiver, a Global Navigation Satellite System (GNSS) wireless transceiver, and the like. In this way, a wireless transceiver of a user terminal on a resource may be subjected to interference from one or more other wireless transceivers. Such interference may be from the same or different Radio Access Technologies (RATs), and the interference may be referred to as an IDC interference. How to reduce the IDC interference at a user terminal is an urgent technical problem to be solved at present.

US 2015/0230286 A1 relates methods for avoiding in-device coexistence, IDC, interference by a mobile terminal in a mobile communication system. An IDC interference indication is reported for one of a first or second cell on which an interference condition is detected; in response an activation/deactivation pattern is received for the one cell, the pattern indicating an off-duration and an offset specifying a time-period during which communication via the cell is to be deactivated; based thereon, subframes are determined from which on communication via the one cell is to be deactivated and re-activated, respectively; and communication on the one cell is deactivated and is re-activated communication at the determined first and second subframe.

US2014/141825 A1 discloses that a user equipment receives control information relating to selecting one or more of plural options to use for delivery of assistance information including at least one parameter relating to setting a threshold for in-device coexistence (IDC) interference. The user equipment sends, to the wireless access network node, a message containing the IDC interference assistance information, according to the control information.

EP2887740A1 relates a signaling method carried out by user equipment (UE) in a wireless communication system. The method comprises: starting a prohibit timer regarding the transmission of a first UE-originated indicator; and restarting the prohibit timer when a handover indication message is received from a network.

### SUMMARY

The invention is set out in the appended set of claims.

In a first aspect, some embodiments of the present disclosure provide an interference processing method performed by a user terminal. The method includes: sending interference-cancellation assistance information to a network-side device; receiving interference-cancellation configuration information sent by the network-side device according to the interference-cancellation assistance information, wherein, the interference-cancellation configuration information includes at least one of configuration information for stopping uplink transmission and configuration information for stopping downlink reception; and in case that interference occurs, performing an interference processing behavior according to the interference-cancellation configuration information, wherein the interference processing behavior includes at least one of stopping uplink transmission and stopping downlink reception; the configuration information for stopping uplink transmission comprises at least one of: space-domain information for stopping uplink transmission and indication information of an uplink channel of which uplink transmission is stopped; the configuration information for stopping downlink reception comprises at least one of: space-domain information for stopping downlink reception and indication information of a downlink channel of which downlink reception is stopped; and the interference-cancellation assistance information comprises space-domain assistance information.

In a second aspect, some embodiments of the present disclosure further provide an interference processing method performed by a network-side device. The method includes: receiving interference-cancellation assistance information sent by a user terminal; and sending interference-cancellation configuration information to the user terminal according to the interference-cancellation assistance information, wherein, the interference-cancellation configuration information includes at least one of configuration information for stopping uplink transmission and configuration information for stopping downlink reception; the configuration information for stopping uplink transmission comprises at least one of: space-domain information for stopping uplink transmission and indication information of an uplink channel of which uplink transmission is stopped; the configuration information for stopping downlink reception comprises at least one of: space-domain information for stopping downlink reception and indication information of a downlink channel of which downlink reception is stopped; and the interference-cancellation assistance information comprises space-domain assistance information.

In a third aspect, some embodiments of the present disclosure further provide a user terminal. The user terminal includes a sending module, used for sending interference-cancellation assistance information to a network-side device; a first receiving module, used for receiving interference-cancellation configuration information sent by the network-side device according to the interference-cancellation assistance information, wherein, the interference-cancellation configuration information includes at least one of configuration information for stopping uplink transmission and configuration information for stopping downlink reception; and a performing module, used for, in case that interference occurs, performing an interference processing behavior according to the interference-cancellation configuration information, wherein the interference processing behavior includes at least one of stopping uplink transmission and stopping downlink reception; the configuration information for stopping uplink transmission comprises at least one of: space-domain information for stopping uplink transmission and indication information of an uplink channel of which uplink transmission is stopped; the configuration information for stopping downlink reception comprises at least one of: space-domain information for stopping downlink reception and indication information of a downlink channel of which downlink reception is stopped; and the interference-cancellation assistance information comprises space-domain assistance information.

In a fourth aspect, some embodiments of the present disclosure also provide a network-side device. The network-side device includes: a receiving module, used for receiving interference-cancellation assistance information sent by a user terminal; and a first sending module, used for sending interference-cancellation configuration information to the user terminal according to the interference-cancellation assistance information, wherein, the interference-cancellation configuration information includes at least one of configuration information for stopping uplink transmission and configuration information for stopping downlink reception; the configuration information for stopping uplink transmission comprises at least one of: space-domain information for stopping uplink transmission and indication information of an uplink channel of which uplink transmission is stopped; the configuration information for stopping downlink reception comprises at least one of: space-domain information for stopping downlink reception and indication information of a downlink channel of which downlink reception is stopped; and the interference-cancellation assistance information comprises space-domain assistance information.

### BRIEF DESCRIPTION OF THE DRAWINGS

In order to more clearly explain technical solutions of embodiments of the present disclosure, accompany drawings to be used in description of the embodiments of the present disclosure will be briefly introduced below. It is apparent that the drawings in the following detailed description are only some embodiments of the present disclosure, and other drawings may be obtained from these drawings without paying creative labor by those of ordinary skill in the art.
FIG. 1 is a structural diagram of an interference processing system provided by some embodiments of the present disclosure;
FIG. 2 is a flowchart of an interference processing method according to the claimed invention;
FIG. 3 is a flowchart of another interference processing method provided by some embodiments of the present disclosure;
FIG. 4 is a flowchart of another interference processing method according to the claimed invention;
FIG. 5 is a flowchart of another interference processing method provided by some embodiments of the present disclosure;
FIG. 6 is a structural diagram of a user terminal according to the claimed invention;
FIG. 7 is a structural diagram of another user terminal provided by some embodiments of the present disclosure;
FIG. 8 is a structural diagram of another user terminal provided by some embodiments of the present disclosure;
FIG. 9 is a structural diagram of a network-side device according to the claimed invention;
FIG. 10 is a structural diagram of another network-side device provided by some embodiments of the present disclosure;
FIG. 11 is a structural diagram of another user terminal provided by some embodiments of the present disclosure; and
FIG. 12 is a structural diagram of another network-side device provided by some embodiments of the present disclosure.

### DETAILED DESCRIPTION

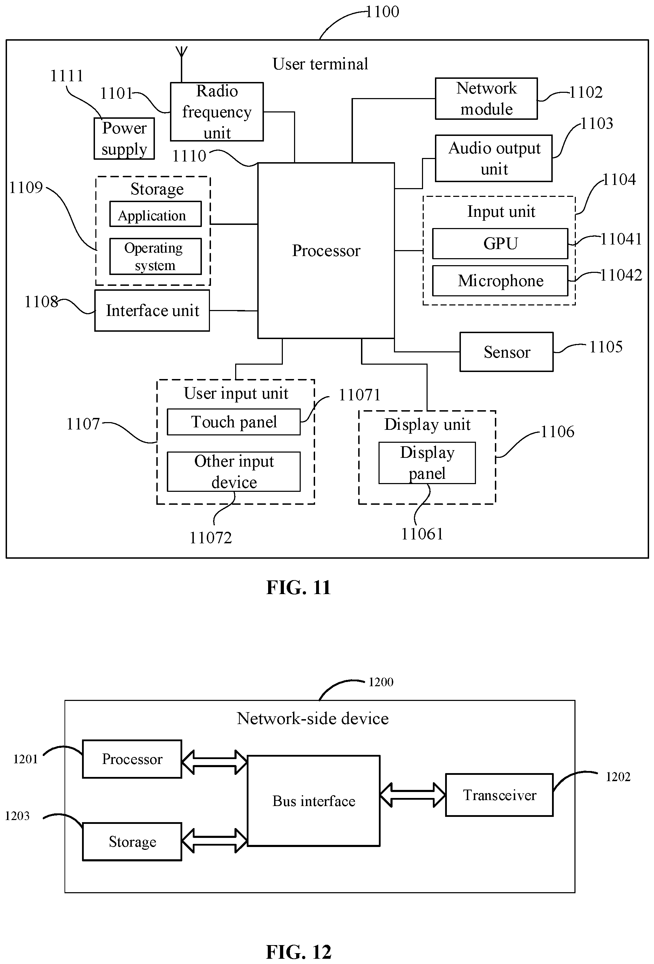

In particular, paragraph [00251] and the embodiments referring to figures 11 and 12 are not according to the invention and are present for illustration purposes only.

The technical solutions in the embodiments of the present disclosure will be clearly and completely described below in conjunction with the accompanying drawings in the embodiments of the present disclosure. It is apparent that the described embodiments are a part, rather than all, of the embodiments of the present disclosure. Based on the embodiments of the present disclosure, all other embodiments obtained by those of ordinary skill in the art without paying creative labor are within the protection scope of the present disclosure.

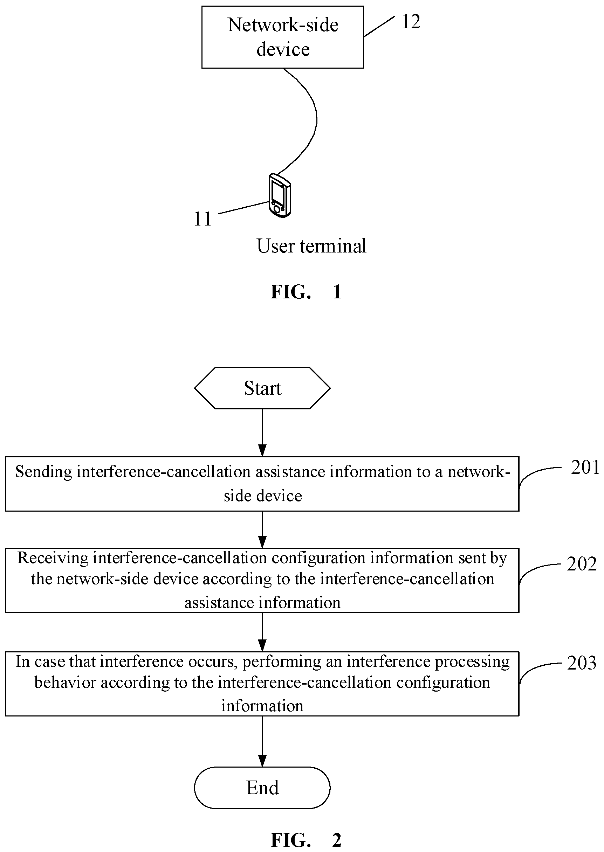

Referring to FIG. 1, FIG. 1 is a structural diagram of an interference processing system provided by some embodiments of the present disclosure. As shown in FIG. 1, the system includes a user terminal 11 and a network-side device 12. The user terminal 11 may be a UE (User Equipment), for example, a terminal-side device such as a mobile phone, a Tablet Personal Computer, a Laptop Computer, a personal digital assistant (PDA), a Mobile Internet Device (MID), or a Wearable Device. It should be noted that in the embodiments of the present disclosure, a specific type of the user terminal 11 is not limited. The network-side device 12 may be a 5G base station (e.g. gNB, 5G NR NB), or the network-side device 12 in a Multiple Connectivity (MC) scene may be a Master Node (MN) or a Secondary Node (SN). The MN and the SN may use the same or different radio technologies. For example, the MN is a 5G base station (for example, gNB, 5G NR NB), and the SN may be a 4G base station (such as, eNB) or a 5G base station. It should be noted that a specific type of the network-side device 12 is not limited in the embodiments of the present disclosure.

Referring to FIG. 2, FIG. 2 is a flowchart of an interference processing method, according to the claimed invention. The method is applied to a user terminal. As shown in FIG. 2, the method includes following steps 201-203.

Step 201: sending interference-cancellation assistance information to a network-side device.

The interference-cancellation assistance information may be used to assist the network-side device to configure interference-cancellation configuration information. After the network-side device receives the assistance information, the network-side device may configure the interference-cancellation configuration information according to the interference-cancellation assistance information. The assistance information is time-domain assistance information, frequency-domain assistance information, space-domain assistance information, or an interfered radio technology type, which may assist the network-side device to configure corresponding interference-cancellation configuration information. In addition, the transmitted interference-cancellation assistance information may be transmitted to the network-side device when interference occurs.

Step 202: receiving the interference-cancellation configuration information sent by the network-side device according to the interference-cancellation assistance information, wherein, the interference-cancellation configuration information includes at least one of configuration information for stopping uplink transmission and configuration information for stopping downlink reception.

The interference-cancellation configuration information transmitted by the network-side device according to the interference-cancellation assistance information may be interference-cancellation configuration information configured by the network-side device for a purpose of reducing or eliminating IDC interference, in a case that the network-side device confirms, through the above interference-cancellation assistance information, resources (for example: time-domain resources, frequency-domain resources or space-domain resources) of interference to which the user terminal is subject, or the radio technology type subject to IDC interference, or transmitting and receiving resources preferred by the user terminal; or the network-side device triggers configuring the interference-cancellation configuration information, through the above interference-cancellation assistance information.

For example, if the interference-cancellation assistance information reported by the user terminal is time-domain assistance information, then the network-side device may configure time-domain information for stopping uplink transmission corresponding to the time-domain assistance information or time-domain information for stopping downlink reception corresponding to the time-domain assistance information. Optionally, if the interference-cancellation assistance information reported by the user terminal is frequency-domain assistance information, then the network-side device may configure frequency-domain information for stopping uplink transmission corresponding to the frequency-domain assistance information or frequency-domain information for stopping downlink reception corresponding to the frequency-domain assistance information.

Of course, the embodiments of the present disclosure do not limit that the interference-cancellation assistance information and the interference-cancellation configuration information are of the same type. For example, frequency-domain assistance information reported by the user terminal (e.g., frequency-domain identifier information of a frequency being interfered with). The network-side device may configure time-domain information for stopping uplink transmission (e.g., uplink transmission is stopped on a next time-domain resource that may generate the same IDC interference) or time-domain information for stopping downlink reception (e.g., downlink reception is stopped on a next time-domain resource that may generate the same IDC interference), so that the user terminal does not transmit or receive in the corresponding time-domain and IDC interference can be reduced or eliminated. Thus, the network-side device can acquire a behavior in which the user terminal transmits data or receives data, so that a time-domain resource at which IDC interference may be generated can be predicated.

As another example, the user terminal reports time-domain assistance information (for example, time-domain resources of uplink transmission preferred by the user terminal), and the network-side device may configure frequency-domain information for stopping uplink transmission. In this way, IDC interference can be reduced or eliminated by this frequency-domain configuration information, since the IDC interference may be generated by uplink transmission performed by the user terminal on a certain frequency-domain resource, not all frequency-domain resources on which uplink transmission is performed at a certain time-domain resource will generate IDC interference.

As another example, the user terminal reports time-domain assistance information (for example, an uplink transmission time-domain resource preferred by the user terminal). The network-side device may configure time-domain information for stopping uplink transmission (e.g., uplink transmission is stopped on a next time-domain resource that may generate the same IDC interference) or time-domain information for stopping downlink reception (e.g., downlink reception is stopped on a next time-domain resource that may generate the same IDC interference), so that the user terminal does not transmit or receive in the corresponding time-domain and IDC interference can be reduced or eliminated. Thus, the network-side device can acquire a behavior in which the user terminal transmits data or receives data, so that a time-domain resource at which IDC interference may be generated can be predicated.

It should be noted that the above is merely an example of the interference-cancellation configuration information sent by the network-side device according to the interference-cancellation assistance information, and in the embodiments of the present disclosure, how to configure the interference-cancellation configuration information, and relationship between the interference-cancellation configuration information and the interference-cancellation assistance information is not limited.

Additionally, the configuration information for stopping uplink transmission may be configuration information for stopping uplink transmission on one or more resources, for example, the configuration information may include configuration information for one or more resources; and the configuration information for stopping downlink reception may be configuration information for stopping downlink reception on one or more resources, for example, the configuration information may include configuration information for one or more resources.

Step 203: in case that interference occurs, performing an interference processing behavior according to the interference-cancellation configuration information, wherein the interference processing behavior includes at least one of stopping uplink transmission and stopping downlink reception.

In case that the interference occurs, performing the interference processing behavior may be performing, according to the configuration information, a corresponding interference processing behavior during occurrence of the interference. For example, uplink transmission corresponding to the configuration information for stopping the uplink transmission is stopped and downlink reception corresponding to the configuration information for stopping the downlink reception is stopped, an effect of reducing or eliminating IDC interference is achieved, thereby improving reliability and a data rate of wireless transmission of the user terminal.

It should be noted that the above method may be applied to a 5G system, but is not limited thereto, for example, the method may also be applied to a future sixth generation (6G) system or the like.

In this way, in the embodiments of the present disclosure, interference-cancellation assistance information is sent to a network-side device, and interference-cancellation configuration information sent by the network-side device according to the interference-cancellation assistance information is received, wherein, the interference-cancellation configuration information includes at least one of configuration information for stopping uplink transmission and configuration information for stopping downlink reception; in case that interference occurs, an interference processing behavior is performed according to the interference-cancellation configuration information, the interference processing behavior includes at least one of stopping uplink transmission and stopping downlink reception, thus, IDC interference at the user terminal can be reduced.

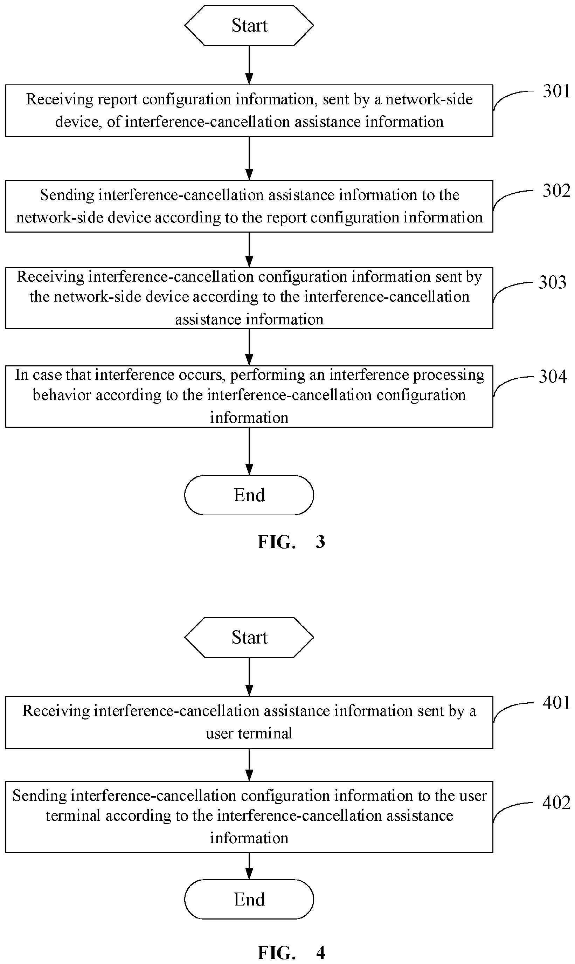

Referring to FIG. 3, FIG. 3 is a flowchart of another interference processing method provided by some embodiments of the present disclosure. The method is applied to a user terminal. As shown in FIG. 3, the method includes the following steps 301-304.

Step 301: receiving report configuration information, sent by the network-side device, of interference-cancellation assistance information.

The report configuration information may be configuration information for notifying the user terminal how to report the interference-cancellation assistance information, for example, may be the type of interference-cancellation assistance information to be reported, or a trigger condition of a report, etc., the present disclosure is not limited thereto.

Step 302: sending interference-cancellation assistance information to the network-side device according to the report configuration information.

After the user terminal receives the report configuration information, the user terminal may report accordingly according to the report configuration information. For example, in a case that interference occurs to the user terminal, the interference-cancellation assistance information is sent to the network-side device. The interference-cancellation assistance information may be information for assisting the network-side device in configuring the interference-cancellation configuration information; after the network-side device receives the assistance information, the network-side device may configure the interference-cancellation configuration information corresponding to the interference-cancellation assistance information.

Through the step 301 and the step 302, corresponding interference-cancellation assistance information can be reported to the network-side device accord to the report configuration information, thereby facilitating the network-side device to configure the interference-cancellation configuration information, in order to improve an effect of interference cancellation. In addition, in the embodiments of the present disclosure, the interference-cancellation assistance information may be referred to as IDC assistance information, and the interference-cancellation configuration information may be referred to as IDC interference-cancellation configuration information, or assistance configuration information of IDC interference cancellation.

As an optional embodiment, the report configuration information includes at least one of: configuration information of a report prohibition timer of interference-cancellation assistance information, and configuration information about whether the user terminal is allowed to report the interference-cancellation assistance information.

The configuration information of the report prohibition timer may be used to notify the user terminal to start a corresponding report prohibition timer, and a time duration of the timer may be indicated in the report configuration information, or may be pre-negotiated between the network-side device and the user terminal, or may be pre-defined in a protocol.

The configuration information about whether the user terminal is allowed to report the interference-cancellation assistance information may be used to notify the user terminal whether to report the interference-cancellation assistance information, and further, may also be a type of interference-cancellation assistance information that is allowed to be reported, or a type of interference-cancellation assistance information that is not allowed to be reported, or the like.

In addition, the report configuration information may also configure information of a type of interference-cancellation assistance information, including, space-domain assistance information, and further including, for example, at least one of time-domain assistance information, and frequency-domain assistance information. Of course, the type of the interference-cancellation assistance information may be pre-negotiated between the user terminal and the network-side device, or may be pre-defined in a protocol, and the embodiments of the present disclosure are not limited thereto.

In this embodiment, by means of the report configuration information, possible waste of transmission resources resulting from directly reporting the interference-cancellation assistance information by the user terminal may be prevented, thereby achieving an effect of saving transmission resources. For example, in some cases, the network side does not allow the user terminal to report, and interference-cancellation assistance information reported in this case may be invalid, and thus directly reporting the interference-cancellation assistance information by the user terminal is a waste of transmission resources.

Optionally, in the embodiments, if the report configuration information includes configuration information of a report prohibition timer of the interference-cancellation assistance information, then after sending the interference-cancellation assistance information to the network-side device according to the report configuration information, the method further includes: starting or restarting a timer corresponding to configuration information of the report prohibition timer, wherein the user terminal is prohibited from reporting the interference-cancellation assistance information during a running period of the timer.

In the embodiment, after the interference-cancellation assistance information is reported, the time corresponding to the configuration information of the report prohibition timer can be started, and the user terminal is prohibited from reporting the interference-cancellation assistance information during the running period of the timer. In this way, the user terminal can be prevented from continuously reporting, resulting in waste of transmission resources, and thus the effect of saving transmission resources can be achieved.

The interference-cancellation assistance information sent to the network-side device includes space-domain assistance information, and may further include at least one of time-domain assistance information, frequency-domain assistance information, and indication information of an interfered radio technology.

The time-domain assistance information may be time-domain information facilitating the network-side device to configure configuration information of an interference message, such as time-domain information affected by interference, or time-domain information of transmission desired (or preferred) by the user terminal, or the like.

The frequency-domain assistance information may be frequency-domain information facilitating the network-side device to configure configuration information of an interference message, such as frequency-domain information affected by interference, or frequency-domain information of an interference source (such as, interfering another frequency), or the like.

The space-domain assistance information may be space-domain information facilitating the network-side device to configure configuration information of an interference message, such as space-domain information affected by interference, or space-domain information of an interference source (such as, interfering another frequency), or the like.

The above-described indication information of the interfered radio technology may be used to indicate the interfered radio technology type, for example, the indication information may include an identifier of the interfered radio technology type or other information.

For example, the time-domain assistance information may include at least one of: frequency-domain information on which the time-domain assistance information acts, space-domain information on which the time-domain assistance information acts, configuration information of downlink discontinuous reception, bitmap information of downlink reception, configuration information of uplink discontinuous transmission, and bitmap information of uplink transmission.

The frequency-domain assistance information may include at least one of: frequency-domain identifier information of an interfered frequency and frequency-domain identifier information of an interference source.

The space-domain assistance information may include at least one of: space-domain identifier information of the interfered frequency and space-domain identifier information of an interference source.

The interfered radio technology may include a 2G technology, a 3G technology, a 4G technology, and a 5G technology. For example, the above-described indication information of the interfered radio technology may include at least one of a 2G technology identifier, a 3G technology identifier, a 4G technology identifier, and a 5G technology identifier.

Configuration information of downlink discontinuous reception, bitmap information of downlink reception, configuration information of uplink discontinuous transmission, and bitmap information of uplink transmission may be configuration information of downlink discontinuous reception desired (or preferred) by the user terminal, bitmap information of downlink reception desired (or preferred) by the user terminal, configuration information of uplink discontinuous transmission desired (or preferred) by the user terminal, and bitmap information of uplink transmission desired (or preferred) by the user terminal, respectively.

In addition, both the configuration information of the downlink discontinuous reception and the configuration information of the uplink discontinuous transmission may be slot offsets (e.g., slot Offset = 1, used to identify slot 1) or other time-domain information. The embodiment of the present disclosure is not limited thereto.

In addition, each bit of the bitmap information of downlink reception or the bitmap information of uplink transmission corresponds to a time-domain index, and the time-domain index includes at least one of a slot identifier, a subframe identifier, and a System Frame Number (SFN) identifier.

The network-side device can be notified, through the above-mentioned time-domain information, of downlink reception or uplink transmission desired by the user terminal, to further reduce or eliminate IDC interference.

The above interference source may be a resource that interferes with other frequencies. In addition, in this embodiment, the frequency-domain information or the frequency-domain identifier information may include at least one of following: a frequency identifier (such as 5 GHz), a bandwidth range (such as 20 MHz), a Bandwidth Part (BWP) identifier such as BWP 1, a cell identifier such as a serving cell 1, and a cell group identifier such as a Master Cell Group (MCG) or a Secondary Cell Group (SCG).

In this embodiment, the space-domain information or the space-domain identifier information may include at least one of a beam identifier (such as beam 1), a beam pair identifier (such as beam pair 1), a Synchronization Signal Block (SSB) identifier (such as SSB 1), and a Channel State Information Reference Signal (CSI-RS) identifier (such as CSI-RS 1), and a Quasi Co-Location (QCL) identifier (such as QCL 1).

In this embodiment, the interference-cancellation assistance information facilitates the network-side device to configure the interference-cancellation configuration information, to further reduce or eliminate IDC interference.

It should be noted that, in this embodiment, the step 301 is optional. For example, the user terminal acquires the report configuration information of the interference-cancellation assistance information defined by a protocol, or does not need the report configuration information, for example, step 302 may be sending interference-cancellation assistance information to the network-side device if the interference-cancellation assistance information is changed.

If the interference-cancellation assistance information is changed, then sending the interference-cancellation assistance information to the network-side device can be understood as a case that a change of the interference-cancellation assistance information is a trigger condition for reporting the interference-cancellation assistance information, for example, a trigger condition indicated by the above report configuration information, or a trigger conditions pre-negotiated between the network-side device and the user terminal or a trigger condition pre-defined by a protocol, etc.

Here, the change of the interference-cancellation assistance information may be a change of interference-cancellation assistance information acquired by the user terminal; or a change of interference-cancellation assistance information reported to the network-side device; for example, at least one of a time-domain assistance information change, a frequency-domain assistance information change, a space-domain assistance information change, and a change of an interfered radio technology type. In addition, the report may be reporting interference-cancellation assistance information having been changed. Of course, an interference-cancellation assistance information change may also cause reporting all interference-cancellation assistance information, and the embodiments of the present disclosure is not limited thereto.

In this embodiment, if the interference-cancellation assistance information is changed, the interference-cancellation assistance information is sent to the network-side device, so that the changed interference-cancellation assistance information can be reported to the network-side device in time, in order to improve an effect of handling interference.

Of course, if the interference-cancellation assistance information is changed, then sending the interference-cancellation assistance information to the network-side device can also be, if the interference-cancellation assistance information is changed, then sending the interference-cancellation assistance information to the network-side device according to the report configuration information. For example, the report configuration information may only include configuration information about whether the user terminal is allowed to report the interference-cancellation assistance information, or include configuration information and a trigger condition about whether the user terminal is allowed to report the interference-cancellation assistance information, and of course, may optionally include configuration information of the timer described above, and the embodiments of the present disclosure are not limited thereto.

It should be noted that this embodiment may be applied to the embodiment shown in FIG. 2. For example, the step 201 may include sending the interference-cancellation assistance information to the network-side device if the interference-cancellation assistance information is changed.

Step 303: receiving the interference-cancellation configuration information sent by the network-side device according to the interference-cancellation assistance information, wherein, the interference-cancellation configuration information includes at least one of configuration information for stopping uplink transmission and configuration information for stopping downlink reception.

Since the interference-cancellation configuration information is configured by the network-side device, the configuration information can be made more flexible and the effect of processing interference can be improved.

Step 304: in case that interference occurs, performing an interference processing behavior according to the interference-cancellation configuration information, wherein the interference processing behavior includes at least one of following: stopping uplink transmission and stopping downlink reception.

Performing the interference processing behavior according to the interference-cancellation configuration information may be performing a corresponding interference processing behavior at a resource or channel type corresponding to the interference-cancellation configuration information. For example, uplink transmission is stopped and downlink reception is stopped to reduce or eliminate IDC interference.

The configuration information for stopping uplink transmission includes space-domain information for stopping uplink transmission or indication information of an uplink channel of which uplink transmission is stopped, and may further include at least one of following: time-domain information for stopping uplink transmission, frequency-domain information for stopping uplink transmission. The configuration information for stopping downlink reception includes at least one of following: time-domain information for stopping downlink reception, frequency-domain information for stopping downlink reception, space-domain information for stopping downlink reception, and indication information of a downlink channel of which downlink reception is stopped.

The time-domain information for stopping uplink transmission may include at least one of following: a slot identifier, a subframe identifier, an SFN identifier, and bitmap information.

The time-domain information for stopping downlink reception may include at least one of following: a slot identifier, a subframe identifier, a system frame number (SFN) identifier, and bitmap information.

Each bit of the bitmap information in the time-domain information for stopping uplink transmission or the bitmap information in the time-domain information for stopping downlink reception corresponds to a time-domain index, and the time-domain index includes at least one of following a slot identifier, a subframe identifier, and an SFN identifier.

Each bit of the time-domain information for stopping uplink transmission may correspond to a time-domain index, and each bit may be used to indicate that uplink transmission is stopped or is not stopped at a corresponding time-domain position. For example, if "0" indicates stopping, then"1" indicates not stopping. Each bit of the time-domain information for stopping downlink reception may correspond to a time-domain index, and each bit may be used to indicate that downlink reception is stopped or is not stopped at a corresponding time-domain position. For example, if "0" indicates stopping, then "1" indicates not stopping.

The frequency-domain information for stopping uplink transmission may include at least one of following: a frequency identifier, a bandwidth range, a bandwidth part (BWP) identifier, a cell identifier, and a cell group identifier.

The frequency-domain information for stopping downlink reception may include at least one of following: a frequency identifier, a bandwidth range, a bandwidth part (BWP) identifier, a cell identifier, and a cell group identifier.

The space-domain information for stopping uplink transmission may include at least one of following: a beam identifier, a beam pair identifier, an SSB identifier, a CSI-RS identifier, and a QCL identifier.

The space-domain information for stopping downlink reception may include at least one of following: a beam identifier, a beam pair identifier, an SSB identifier, a CSI-RS identifier, and a QCL identifier.

The indication information of an uplink channel of which uplink transmission is stopped may be a channel type of an uplink channel for indicating that uplink transmission is stopped. For example, the indication information may include channel type information of an uplink channel of which uplink transmission is stopped. In addition, the uplink channel of which uplink transmission is stopped may include at least one of following: a Physical Uplink Control Channel (PUCCH), a Physical Uplink Shared Channel (PUSCH), a Physical Random Access Channel (PRACH), and a Sounding Reference Signal (SRS) channel.

The indication information of a downlink channel of which downlink reception is stopped may be a channel type of a downlink channel for indicating that downlink reception is stopped. For example, the indication information may include channel type information of a downlink channel of which downlink reception is stopped. In addition, the downlink channel of which downlink reception is stopped may include at least one of following: a Physical Downlink Control Channel (PDCCH), a Physical Downlink Shared Channel (PDSCH), and a Physical Broadcast Channel (PBCH).

Through the configuration information for stopping uplink transmission described above, the user terminal can stop uplink transmission on a corresponding resource or channel type to reduce or eliminate interference. For example, stopping the uplink transmission in step 304 may include at least one of following: stopping uplink transmission in a time-domain corresponding to the time-domain information for stopping uplink transmission, stopping uplink transmission in a frequency-domain corresponding to the frequency-domain information for stopping uplink transmission, stopping uplink transmission in a space-domain corresponding to the space-domain information for stopping uplink transmission, and stopping uplink transmission of an uplink channel corresponding to an uplink channel type for stopping uplink transmission.

Through the configuration information for stopping downlink reception described above, the user terminal can stop downlink reception on a corresponding resource or channel type, to reduce or eliminate interference. For example, stopping downlink reception in step 304 may include at least one of following: stopping downlink reception in a time-domain corresponding to the time-domain information for stopping downlink reception, stopping downlink reception in a frequency-domain corresponding to the frequency-domain information for stopping downlink reception, stopping downlink reception in a space-domain corresponding to the space-domain information for stopping downlink reception, and stopping downlink reception of a downlink channel corresponding to a downlink channel type for stopping downlink reception.

In this embodiment, a plurality of optional embodiments are added on the basis of the embodiment shown in FIG. 2, and the IDC interference can be reduced or eliminated in the optical embodiments, and the user terminal may report, to the network-side device, assistance information of different interference interfering the user terminal in time-domain, frequency-domain and space-domain, and the network-side device may perform a targeted interference cancellation operation on interference in a time domain, a frequency domain and a space domain according to the assistance information reported by the user terminal, so as to reduce or eliminate interference subjected to by the user terminal, and improve reliability and a data rate of radio transmission of the user terminal.

Referring to FIG. 4, FIG. 4 is a flowchart of another interference processing method according to the claimed invention. The method is applied to a network-side device. As shown in FIG. 4, the method includes the following steps 401-402.

Step 401: receiving interference-cancellation assistance information sent by a user terminal.

Step 402: sending interference-cancellation configuration information to the user terminal according to the interference-cancellation assistance information, wherein, the interference-cancellation configuration information includes at least one of configuration information for stopping uplink transmission and configuration information for stopping downlink reception.

The configuration information for stopping uplink transmission includes space-domain information for stopping uplink transmission, or indication information of an uplink channel of which uplink transmission is stopped, and may further include at least one of following: time-domain information for stopping uplink transmission, frequency-domain information for stopping uplink transmission; the configuration information for stopping downlink reception includes at least one of following: time-domain information for stopping downlink reception, frequency-domain information for stopping downlink reception, space-domain information for stopping downlink reception, and indication information of a downlink channel of which downlink reception is stopped.

Optionally, the time-domain information for stopping uplink transmission includes at least one of following: a slot identifier, a subframe identifier, an SFN identifier, and bitmap information; the time-domain information for stopping downlink reception includes at least one of following: a slot identifier, a subframe identifier, an SFN identifier, and bitmap information.

Each bit of the bitmap information in the time-domain information for stopping uplink transmission or the bitmap information in the time-domain information for stopping downlink reception corresponds to a time-domain index, and the time-domain index includes at least one of a slot identifier, a subframe identifier, and an SFN identifier.

Optionally, the frequency-domain information for stopping uplink transmission includes at least one of a frequency identifier, a bandwidth range, a BWP identifier, a cell identifier, and a cell group identifier; the frequency-domain information for stopping downlink reception includes at least one of a frequency identifier, a bandwidth range, a BWP identifier, a cell identifier, and a cell group identifier.

The space-domain information for stopping uplink transmission includes at least one of a beam identifier, a beam pair identifier, an SSB identifier, a CSI-RS identifier, and a QCL identifier; the space-domain information for stopping downlink reception includes at least one of a beam identifier, a beam pair identifier, an SSB identifier, a CSI-RS identifier, and a QCL identifier.

The uplink channel of which uplink transmission is stopped includes at least one of a PUCCH, a PUSCH, a PRACH, and an SRS channel; the downlink channel of which downlink reception is stopped includes at least one of a PDCCH, a PDSCH, and a PBCH.

Optionally, before receiving the interference-cancellation assistance information sent by the user terminal, the method further includes: sending report configuration information of the interference-cancellation assistance information to the user terminal.

Optionally, the report configuration information includes at least one of: configuration information of a report prohibition timer of interference-cancellation assistance information, and configuration information about whether the user terminal is allowed to report the interference-cancellation assistance information.

The interference-cancellation assistance information includes space-domain assistance information, and may further include at least one of following: time-domain assistance information, frequency-domain assistance information, and indication information of an interfered radio technology.

Optionally, the time-domain assistance information includes at least one of: frequency-domain information on which the time-domain assistance information acts, space-domain information on which the time-domain assistance information acts, configuration information of downlink discontinuous reception, bitmap information of downlink reception, configuration information of uplink discontinuous transmission, and bitmap information of uplink transmission.

The frequency-domain assistance information includes at least one of following: frequency-domain identifier information of an interfered frequency and frequency-domain identifier information of an interference source.

The space-domain assistance information includes at least one of: space-domain identifier information of the interfered frequency and space-domain identifier information of an interference source.

The interfered radio technology includes at least one of a 2G technology, a 3G technology, a 4G technology, and a 5G technology.

It should be noted that, the embodiment is an embodiment of the network-side device corresponding to the embodiments shown in FIGs. 2 to 3, specific implementation of the present embodiment may be obtained with reference to the embodiments shown in FIGs. 2 to 3, and the same or similar beneficial effects may be achieved, description thereof will not be repeated here in order to avoid repetition.

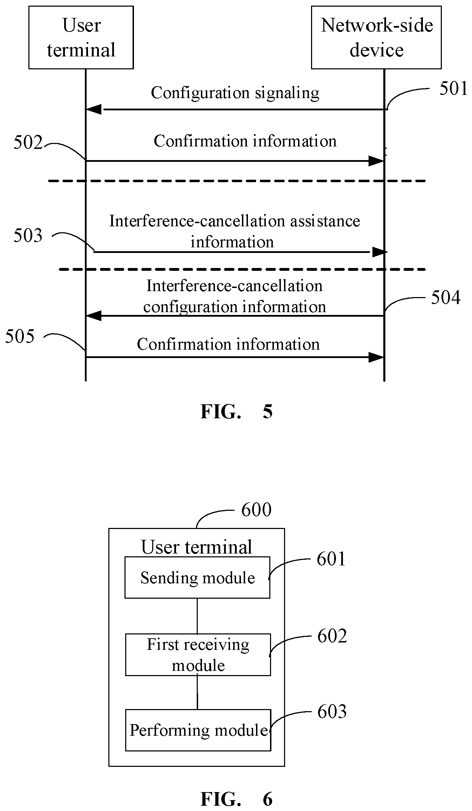

Referring to FIG. 5, FIG. 5 is a schematic diagram of another interference processing method provided by some embodiments of the present disclosure. As shown in FIG. 5, the method includes the following steps 501-505.

Step 501: sending, by a network-side device, a configuration signaling to control reporting interference-cancellation assistance information performed by the user terminal, wherein the configuration signaling includes any combination of one or more of the following: configuration information of a report prohibition timer of interference-cancellation assistance information (such as a duration of a timer), and configuration information about whether the interference-cancellation assistance information is allowed to be reported.

The "interference-cancellation assistance information" type includes any combination of one or more of the following: time-domain assistance information, frequency-domain assistance information and space-domain assistance information.

Step 502: feeding back confirmation information to the network-side device by the user terminal.

Step 503: reporting, by the user terminal, interference-cancellation assistance information to the network-side device in case that interference occurs.

If the network configures a report prohibition timer of the interference-cancellation assistance information, a behavior of the user terminal includes any combination of one or more of the following: starting, by the user terminal, the "report prohibition timer of interference-cancellation assistance information" after the user terminal reports the interference-cancellation assistance information; during a running period of "report prohibition timer of interference-cancellation assistance information", prohibiting the user terminal from reporting the interference-cancellation assistance information.

The interference-cancellation assistance information reported by the user terminal includes any combination of one or more of the following: time-domain assistance information, frequency-domain assistance information, space-domain assistance information, and an interfered radio technology type.

The "time-domain assistance information" may include any combination of one or more of following: frequency-domain information on which the "time-domain assistance information" acts (such as a frequency identifier corresponding to the "time-domain assistance information", space-domain information on which the "time-domain assistance information" acts (such as a beam identifier corresponding to the "time-domain assistance information"), configuration information of downlink discontinuous reception preferred by the user terminal, bitmap information of downlink reception preferred by the user terminal, configuration information of uplink discontinuous transmission preferred by the user terminal, and bitmap information of uplink transmission preferred by the user terminal.

The "configuration information of the discontinuous reception" or the "configuration information of the discontinuous transmission" may be any combination of one or more of following: a slot offset (e.g., slot Offset = 1, used to identify slot 1).

The "bitmap information" includes any combination of one or more of the following: a slot identifier (e.g., the first bit identifying the slot 1).

The "frequency-domain assistance information" includes any combination of one or more of the following: "frequency-domain identifier information" of a frequency being interfered and "frequency-domain identifier information" of a frequency interfering other frequencies.

The "space-domain assistance information" includes any combination of one or more of the following: "space-domain identifier information" of a frequency being interfered and "space-domain identifier information" of a frequency interfering other frequencies.

In addition, the frequency-domain information on which the "time-domain assistance information" acts or "frequency-domain identifier information" includes any combination of one or more of the following: a frequency identifier (such as 5 GHz), a bandwidth range (such as 20 MHz), a BWP identifier (such as BWP 1), a cell identifier (such as a serving cell 1), and a cell group identifier (such as a Master Cell Group (MCG) or a Secondary Cell Group (SCG)).

"The space-domain information on which the 'time-domain assistance information' acts" or "space-domain identifier information" includes any combination of one or more of the following: a beam identifier (such as beam 1), a beam pair identifier (such as beam pair 1), an SSB identifier (such as SSB 1), a CSI-RS identifier (such as CSI-RS 1), and a QCL identifier (such as QCL 1).
"the interfered radio technology type " includes any combination of one or more of the following: a 5G technology identifier (such as NR), a 3G technology identifier (such as UTRAN), a 2G technology identifier (such as GSM).
a condition for the UE to trigger reporting of the "interference-cancellation assistance information" includes any combination of one or more of the following: a time-domain assistance information change, a frequency-domain assistance information change, a space-domain assistance information change, and a change of an interfered radio technology type.

Step 504: according to the assistance information reported in step 503 or spontaneously, sending, by network-side device a protocol-specified interference-cancellation configuration information to the user terminal, wherein the information includes any combination of one or more of the following: configuration information for the user terminal to stop uplink transmission by itself and configuration information for the user terminal to stop downlink reception by itself.

The "configuration information for the user terminal to stop uplink transmission by itself' includes any combination of one or more of the following: time-domain information for stopping uplink transmission, frequency-domain information for stopping uplink transmission, space-domain information for stopping uplink transmission, and an uplink channel type of which uplink transmission is stopped.

The "configuration information for the user terminal to stop downlink reception by itself' includes any combination of one or more of the following: time-domain information for stopping downlink reception, frequency-domain information for stopping downlink reception, space-domain information for stopping downlink reception, and a downlink channel type of which downlink reception is stopped.

The "time-domain information" includes any combination of one or more of the following: a slot identifier, a subframe identifier, an SFN identifier, and bitmap information.

The "bitmap information" includes a time-domain index corresponding to each bit identifier, a value of each bit identifies whether the user terminal can stop uplink transmission or downlink reception (if "0" indicates stopping, then" 1" indicates not stopping).

"The time-domain index corresponding to each bit identifier" includes any combination of one or more of the following: a slot identifier, a subframe identifier, and an SFN identifier.

The "frequency-domain information" can be obtained by referring to a corresponding description of the "frequency-domain identifier information" in step 503, and the "space-domain information" can be obtained by referring to a corresponding description of the "space-domain identifier information" in step 503, and detailed description thereof is not given here.

The "uplink channel type" includes any combination of one or more of the following: a PUCCH, a PUSCH, a PRACH, and an SRS channel.

The "downlink channel type" includes any combination of one or more of the following: a PDCCH, a PDSCH, and a PBCH.

Step 505: feeding back, by the user terminal, configuration confirmation information to the network-side device.

Thereafter, a behavior performed by the user terminal according to the configuration information in the step 504 or the configuration information specified by a protocol includes any combination of one or more of the following: stopping uplink transmission in case that interference occurs and stopping downlink reception in case that interference occurs.

The behavior of "stopping uplink transmission" includes any combination of one or more of the following: stopping uplink transmission in a time-domain configuration, stopping uplink transmission in a frequency-domain configuration, stopping uplink transmission in a space-domain configuration, and stopping uplink transmission in an uplink channel type configuration.

The behavior of "stopping downlink reception" includes any combination of one or more of the following: stopping downlink reception in a time-domain configuration, stopping downlink reception in a frequency-domain configuration, stopping downlink reception in a space-domain configuration, and stopping downlink reception in a downlink channel type configuration.

The "time-domain configuration" includes any combination of one or more of the following: a slot identifier, a subframe identifier, an SFN identifier, and bitmap information.

The "bitmap information" includes a time-domain index corresponding to each bit identifier, a value of each bit identifies whether the user terminal can stop uplink transmission or downlink reception (if "0" indicates stopping, then" 1" indicates not stopping).

"The time-domain index corresponding to each bit identifier" includes any combination of one or more of the following: a slot identifier, a subframe identifier, and an SFN identifier.

The "frequency-domain configuration" can be obtained by referring to a corresponding description of the "frequency-domain identifier information" in step 503, and the "space-domain configuration" can be obtained by referring to a corresponding description of the "space-domain identifier information" in step 503, and detailed description thereof is not given here.

The "uplink channel type" includes any combination of one or more of the following: a PUCCH, a PUSCH, a PRACH, and an SRS channel.

The "downlink channel type" includes any combination of one or more of the following: a PDCCH, a PDSCH, and a PBCH.

In this embodiment, the user terminal can report, to the network side, assistance information of different interference interfering the user terminal in the time-domain, the frequency-domain and the space-domain, and the network-side device may perform a targeted interference cancellation operation on the interference in a time domain, a frequency domain and a space domain according to the assistance information reported by the user terminal, so as to reduce or eliminate interference subjected to by the user terminal, and improve reliability and a data rate of radio transmission of the user terminal.

Referring to FIG. 6, which is a structure diagram of a user terminal according to the claimed invention; as shown in FIG. 6, the user terminal 600 includes a sending module 601, a first receiving module 602, and a performing module 603.

The sending module 601 is used for sending interference-cancellation assistance information to a network-side device. The first receiving module 602 is used for receiving interference-cancellation configuration information sent by the network-side device according to the interference-cancellation assistance information, wherein, the interference-cancellation configuration information includes at least one of configuration information for stopping uplink transmission and configuration information for stopping downlink reception. The performing module 603 is used for, in case that interference occurs, performing an interference processing behavior according to the interference-cancellation configuration information, wherein the interference processing behavior includes at least one of stopping uplink transmission and stopping downlink reception.

Configuration information for stopping uplink transmission includes space-domain information for stopping uplink transmission, or indication information of an uplink channel of which uplink transmission is stopped, and may further include at least one of following: time-domain information for stopping uplink transmission, frequency-domain information for stopping uplink transmission.

Configuration information for stopping downlink reception includes at least one of following: time-domain information for stopping downlink reception, frequency-domain information for stopping downlink reception, space-domain information for stopping downlink reception, and indication information of a downlink channel of which downlink reception is stopped.

The time-domain information for stopping uplink transmission may include at least one of following: a slot identifier, a subframe identifier, an SFN identifier, and bitmap information.

The time-domain information for stopping downlink reception may include at least one of following: a slot identifier, a subframe identifier, an SFN identifier, and bitmap information.

Each bit of the bitmap information in the time-domain information for stopping uplink transmission or the bitmap information in the time-domain information for stopping downlink reception corresponds to a time-domain index, and the time-domain index includes at least one of following: a slot identifier, a subframe identifier, and an SFN identifier.

Frequency-domain information for stopping uplink transmission may include at least one of following: a frequency identifier, a bandwidth range, a BWP identifier, a cell identifier, and a cell group identifier.

Frequency-domain information for stopping downlink reception may include at least one of following: a frequency identifier, a bandwidth range, a BWP identifier, a cell identifier, and a cell group identifier.

Space-domain information for stopping uplink transmission may include at least one of following: a beam identifier, a beam pair identifier, an SSB identifier, a CSI-RS identifier, and a QCL identifier.

Space-domain information for stopping downlink reception may include at least one of following: a beam identifier, a beam pair identifier, an SSB identifier, a CSI-RS identifier, and a QCL identifier.

The uplink channel of which uplink transmission is stopped may include at least one of following: a PUCCH, a PUSCH, a PRACH, and an SRS channel.

Optionally, stopping the uplink transmission may include at least one of following: stopping uplink transmission in a time-domain corresponding to the time-domain information for stopping uplink transmission, stopping uplink transmission in a frequency-domain corresponding to the frequency-domain information for stopping uplink transmission, stopping uplink transmission in a space-domain corresponding to the space-domain information for stopping uplink transmission, and stopping uplink transmission of an uplink channel corresponding to an uplink channel type for stopping uplink transmission.

Stopping downlink reception may include at least one of following: stopping downlink reception in a time-domain corresponding to the time-domain information for stopping downlink reception, stopping downlink reception in a frequency-domain corresponding to the frequency-domain information for stopping downlink reception, stopping downlink reception in a space-domain corresponding to the space-domain information for stopping downlink reception, and stopping downlink reception of a downlink channel corresponding to a downlink channel type for stopping downlink reception.

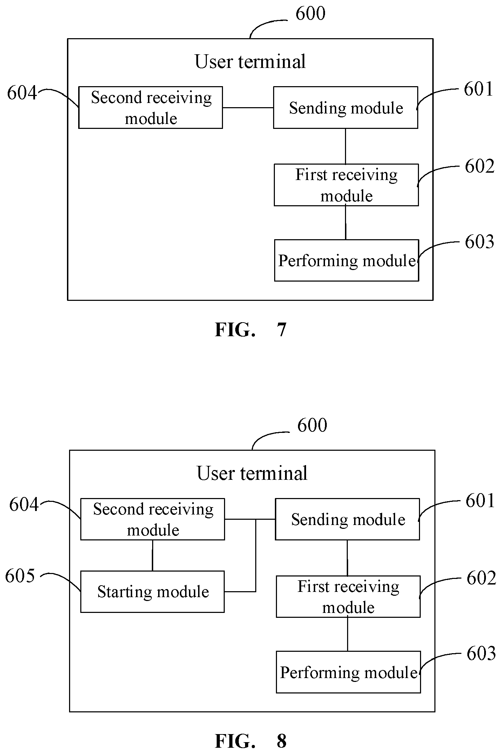

Optionally, as shown in FIG. 7, the user terminal 600 includes a second receiving module 604.

The second receiving module 604 is used for receiving report configuration information, sent by the network-side device, of interference-cancellation assistance information.

The sending module 601 is used for sending the interference-cancellation assistance information to the network-side device according to the report configuration information.

Optionally, the report configuration information includes at least one of: configuration information of a report prohibition timer of interference-cancellation assistance information, and configuration information about whether the user terminal is allowed to report the interference-cancellation assistance information.

Optionally, if the report configuration information includes the configuration information of the report prohibition timer of the interference-cancellation assistance information, as shown in FIG. 8, the user terminal 600 further includes a starting module 605. The starting module 605 is used for starting or restarting a timer corresponding to configuration information of the report prohibition timer, wherein the user terminal is prohibited from reporting the interference-cancellation assistance information during a running period of the timer.

The interference-cancellation assistance information sent to the network-side device includes space-domain assistance information, may further include at least one of: time-domain assistance information, frequency-domain assistance information, and indication information of an interfered radio technology.

The time-domain assistance information may include at least one of: frequency-domain information on which the time-domain assistance information acts, space-domain information on which the time-domain assistance information acts, configuration information of downlink discontinuous reception, bitmap information of downlink reception, configuration information of uplink discontinuous transmission, and bitmap information of uplink transmission.

The frequency-domain assistance information may include at least one of: frequency-domain identifier information of an interfered frequency and frequency-domain identifier information of an interference source.

The space-domain assistance information may include at least one of: space-domain identifier information of the interfered frequency and space-domain identifier information of an interference source.

The interfered radio technology may include at least one of a 2G technology, a 3G technology, a 4G technology, and a 5G technology.

Optionally, the sending module 601 is used for sending the interference-cancellation assistance information to the network-side device if the interference-cancellation assistance information is changed.

The user terminal provided in the embodiments of the present disclosure can implement various processes implemented by the user terminal in the method embodiments of FIGs. 2 to 3, and in order to avoid repetition, description thereof is omitted here, and IDC interference at the user terminal can be reduced.

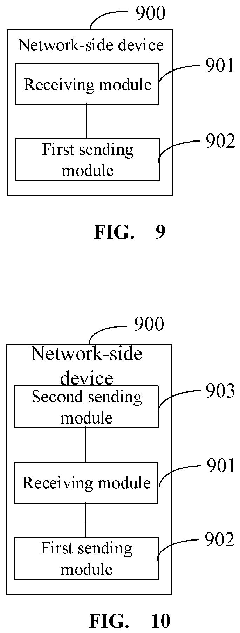

Referring to FIG. 9, FIG. 9 is a structural diagram of a network-side device according to the claimed invention; as shown in FIG. 9, the network-side device 900 includes a receiving module 901 and a first sending module 902.

The receiving module 901 is used for receiving interference-cancellation assistance information sent by a user terminal.

The first sending module 902 is used for sending interference-cancellation configuration information to the user terminal according to the interference-cancellation assistance information, wherein, the interference-cancellation configuration information includes at least one of configuration information for stopping uplink transmission and configuration information for stopping downlink reception.

The configuration information for stopping uplink transmission includes at least one of following: time-domain information for stopping uplink transmission, frequency-domain information for stopping uplink transmission, space-domain information for stopping uplink transmission, and indication information of an uplink channel of which uplink transmission is stopped; the configuration information for stopping downlink reception includes at least one of following: time-domain information for stopping downlink reception, frequency-domain information for stopping downlink reception, space-domain information for stopping downlink reception, and indication information of a downlink channel of which downlink reception is stopped.

Optionally, the time-domain information for stopping uplink transmission includes at least one of following: a slot identifier, a subframe identifier, an SFN identifier, and bitmap information; the time-domain information for stopping downlink reception includes at least one of following: a slot identifier, a subframe identifier, an SFN identifier, and bitmap information.

Each bit of the bitmap information in the time-domain information for stopping uplink transmission or the bitmap information in the time-domain information for stopping downlink reception corresponds to a time-domain index, and the time-domain index includes at least one of a slot identifier, a subframe identifier, and an SFN identifier.

Optionally, the frequency-domain information for stopping uplink transmission includes at least one of a frequency identifier, a bandwidth range, a BWP identifier, a cell identifier, and a cell group identifier; the frequency-domain information for stopping downlink reception includes at least one of a frequency identifier, a bandwidth range, a BWP identifier, a cell identifier, and a cell group identifier.

The space-domain information for stopping uplink transmission includes at least one of a beam identifier, a beam pair identifier, an SSB identifier, a CSI-RS identifier, and a QCL identifier; the space-domain information for stopping downlink reception includes at least one of a beam identifier, a beam pair identifier, an SSB identifier, a CSI-RS identifier, and a QCL identifier.

The uplink channel of which uplink transmission is stopped includes at least one of a PUCCH, a PUSCH, a PRACH, and an SRS channel; the downlink channel of which downlink reception is stopped includes at least one of a PDCCH, a PDSCH, and a PBCH.

Optionally, as shown in FIG. 10, the network-side device 900 further includes a second sending module 903. The second sending module 903 is used for sending report configuration information of the interference-cancellation assistance information to the user terminal.

Optionally, the report configuration information includes at least one of: configuration information of a report prohibition timer of interference-cancellation assistance information, and configuration information about whether the user terminal is allowed to report the interference-cancellation assistance information.

The interference-cancellation assistance information includes space-domain assistance information, and may further include at least one of following: time-domain assistance information, frequency-domain assistance information, and indication information of an interfered radio technology.

Optionally, the time-domain assistance information includes at least one of: frequency-domain information on which the time-domain assistance information acts, space-domain information on which the time-domain assistance information acts, configuration information of downlink discontinuous reception, bitmap information of downlink reception, configuration information of uplink discontinuous transmission, and bitmap information of uplink transmission.

The frequency-domain assistance information includes at least one of following: frequency-domain identifier information of an interfered frequency and frequency-domain identifier information of an interference source.

The space-domain assistance information includes at least one of: space-domain identifier information of the interfered frequency and space-domain identifier information of an interference source.

The interfered radio technology includes at least one of a 2G technology, a 3G technology, a 4G technology, and a 5G technology.

The base station provided in the embodiment of the present disclosure can implement various processes implemented by the network-side device in the method embodiment of FIG. 4. Description thereof is not repeated here to avoid repetition, and IDC interference at the user terminal can be reduced.

FIG. 11 is a schematic diagram of a hardware structure of a user equipment implementing various embodiments of the present disclosure.

The user equipment 1100 includes, but is not limited to, a radio frequency unit 1101, a network module 1102, an audio output unit 1103, an input unit 1104, a sensor 1105, a display unit 1106, a user input unit 1107, an interface unit 1108, a storage 1109, a processor 1110, and a power supply 1111. Those skilled in the art will appreciate that the terminal structure shown in FIG. 11 does not constitute a limitation to a terminal. The terminal may include more or fewer components than illustrated components, or combine certain components, or different component arrangements. In an embodiment of the present disclosure, the terminal include, but is not limited to, a mobile phone, a tablet computer, a notebook computer, a palmtop computer, an in-vehicle terminal, a wearable device, a pedometer, and the like.

The radio frequency unit 1101 is used for: sending interference-cancellation assistance information to a network-side device; receiving the interference-cancellation configuration information sent by the network-side device according to the interference-cancellation assistance information, wherein, the interference-cancellation configuration information includes at least one of configuration information for stopping uplink transmission and configuration information for stopping downlink reception.

The processor 1110 is used for: in case that interference occurs, performing an interference processing behavior according to the interference-cancellation configuration information, wherein the interference processing behavior includes at least one of stopping uplink transmission and stopping downlink reception.

Optionally, the configuration information for stopping uplink transmission includes at least one of following: time-domain information for stopping uplink transmission, frequency-domain information for stopping uplink transmission, space-domain information for stopping uplink transmission, and indication information of an uplink channel of which uplink transmission is stopped. The configuration information for stopping downlink reception includes at least one of following: time-domain information for stopping downlink reception, frequency-domain information for stopping downlink reception, space-domain information for stopping downlink reception, and indication information of a downlink channel of which downlink reception is stopped.

Optionally, the time-domain information for stopping uplink transmission may include at least one of following: a slot identifier, a subframe identifier, an SFN identifier, and bitmap information. The time-domain information for stopping downlink reception may include at least one of following: a slot identifier, a subframe identifier, an SFN identifier, and bitmap information.

Each bit of the bitmap information in the time-domain information for stopping uplink transmission or the bitmap information in the time-domain information for stopping downlink reception corresponds to a time-domain index, and the time-domain index includes at least one of following: a slot identifier, a subframe identifier, and an SFN identifier.

Optionally, the frequency-domain information for stopping uplink transmission may include at least one of following: a frequency identifier, a bandwidth range, a bandwidth part (BWP) identifier, a cell identifier, and a cell group identifier.

The frequency-domain information for stopping downlink reception may include at least one of following: a frequency identifier, a bandwidth range, a BWP identifier, a cell identifier, and a cell group identifier.

The space-domain information for stopping uplink transmission may include at least one of following: a beam identifier, a beam pair identifier, an SSB identifier, a CSI-RS identifier, and a QCL identifier.

The space-domain information for stopping downlink reception may include at least one of following: a beam identifier, a beam pair identifier, an SSB identifier, a CSI-RS identifier, and a QCL identifier.

The uplink channel of which uplink transmission is stopped may include at least one of following: a Physical Uplink Control Channel (PUCCH), a Physical Uplink Shared Channel (PUSCH), a Physical Random Access Channel (PRACH), and a Sounding Reference Signal (SRS) channel.

The downlink channel of which downlink reception is stopped may include at least one of following: a Physical Downlink Control Channel (PDCCH), a Physical Downlink Shared Channel (PDSCH), and a Physical Broadcast Channel (PBCH).

Optionally, stopping the uplink transmission includes at least one of following: stopping uplink transmission in a time-domain corresponding to the time-domain information for stopping uplink transmission, stopping uplink transmission in a frequency-domain corresponding to the frequency-domain information for stopping uplink transmission, stopping uplink transmission in a space-domain corresponding to the space-domain information for stopping uplink transmission, and stopping uplink transmission of an uplink channel corresponding to an uplink channel type for stopping uplink transmission.

Stopping downlink reception includes at least one of following: stopping downlink reception in a time-domain corresponding to the time-domain information for stopping downlink reception, stopping downlink reception in a frequency-domain corresponding to the frequency-domain information for stopping downlink reception, stopping downlink reception in a space-domain corresponding to the space-domain information for stopping downlink reception, and stopping downlink reception of a downlink channel corresponding to a downlink channel type for stopping downlink reception.

Optionally, before sending the interference-cancellation assistance information the network-side device, the radio frequency unit 1101 is further used for receiving report configuration information, sent by the network-side device, of interference-cancellation assistance information.

Sending the interference-cancellation assistance information the network-side device performed by the radio frequency unit 1101 includes: sending the interference-cancellation assistance information to the network-side device according to the report configuration information.

Optionally, the report configuration information includes at least one of: configuration information of a report prohibition timer of interference-cancellation assistance information, and configuration information about whether the user terminal is allowed to report the interference-cancellation assistance information.

Optionally, if the report configuration information includes configuration information of a report prohibition timer of the interference-cancellation assistance information, then after sending the interference-cancellation assistance information to the network-side device according to the report configuration information, the processor 1110 is further used for: starting or restarting a timer corresponding to configuration information of the report prohibition timer, wherein the user terminal is prohibited from reporting the interference-cancellation assistance information during a running period of the timer.

Optionally, the interference-cancellation assistance information sent to the network-side device includes at least one of: time-domain assistance information, frequency-domain assistance information, space-domain assistance information, and indication information of an interfered radio technology.

Optionally, the time-domain assistance information includes at least one of: frequency-domain information on which the time-domain assistance information acts, space-domain information on which the time-domain assistance information acts, configuration information of downlink discontinuous reception, bitmap information of downlink reception, configuration information of uplink discontinuous transmission, and bitmap information of uplink transmission.

The frequency-domain assistance information includes at least one of: frequency-domain identifier information of an interfered frequency and frequency-domain identifier information of an interference source.

The space-domain assistance information includes at least one of: space-domain identifier information of the interfered frequency and space-domain identifier information of an interference source.

The interfered radio technology includes a 2G technology, a 3G technology, a 4G technology, and a 5G technology.

Optionally, sending the interference-cancellation assistance information to the network-side device performed by the radio frequency unit 1101, includes: if the interference-cancellation assistance information is changed, then sending the interference-cancellation assistance information to the network-side device.

The user terminal can reduce IDC interference at the user terminal.

It should be understood that, in the embodiments of the present disclosure, the radio frequency unit 1101 may be used for receiving and transmitting signals in processes of transmitting and receiving information or talking. Specifically, after the radio frequency unit 1101 receives downlink data from the base station, and the downlink data is transferred by the radio frequency unit 1101 to the processor 1110 for processing; and additionally the radio frequency unit 1101 sends uplink data to the base station. Generally, the radio frequency unit 1101 includes, but is not limited to, an antenna, at least one amplifier, a transceiver, a coupler, a low noise amplifier, a duplexer, and the like. In addition, the radio frequency unit 1101 may also communicate with a network and other devices through a wireless communication system.

The user terminal provides a wireless broadband internet access to the user through the network module 1102, such as helping the user to send and receive emails, browse web pages, access streaming media, and the like.

The audio output unit 1103 may convert audio data received by the radio frequency unit 1101 or the network module 1102 or stored in the storage 1109 into an audio signal and output the audio signal as sound. The audio output unit 1103 may also provide audio output (e.g., a call signal reception sound, a message reception sound, etc.) related to a specific function performed by the user terminal 1100. The audio output unit 1103 includes a speaker, a buzzer, a receiver, and the like.

The input unit 1104 is used to receive an audio or video signal. The input unit 1104 may include a Graphics Processing Unit (GPU) 11041 and a microphone 11042. The graphics processing unit 11041 processes image data of a still picture or a video obtained by an image capturing device (such as a camera) in a video capturing mode or an image capturing mode. The processed image frame may be displayed on the display unit 1106. Image frames processed by the graphics processing unit 11041 may be stored in the storage 1109 (or other storage media) or sent via the radio frequency unit 1101 or the network module 1102. The microphone 11042 may receive sound and be able to process such sound into audio data. The processed audio data may be converted, in a case of a telephone call mode, into a format output that may be sent to a mobile communication base station via the radio frequency unit 1101.

The user equipment 1100 also includes at least one sensor 1105, such as a light sensor, a motion sensor, and other sensors. In particular, the light sensor includes an ambient light sensor and a proximity sensor, wherein the ambient light sensor may adjust brightness of the display panel 11061 according to brightness of ambient light. The proximity sensor may turn off the display panel 11061 and/or a backlight when the user terminal 1100 moves close to the ear. As one type of motion sensor, the accelerometer sensor can detect a value of an acceleration in each direction (generally the three axes directions), and can detect a magnitude and a direction of gravity when being stationary, can be used to recognize a posture of a terminal (such as horizontal-vertical screen switching, a related game, a magnetometer posture calibration), a vibration-recognition related function (such as a pedometer, tapping), and the like. The sensor 1105 may further include a fingerprint sensor, a pressure sensor, an iris sensor, a molecular sensor, a gyroscope, a barometer, a hygrometer, a thermometer, an infrared sensor, and the like, which will not be described herein.

The display unit 1106 is used to display information inputted by the user or information provided to the user. The display unit 1106 may include a display panel 11061 that may be configured in the form of a Liquid Crystal Display (LCD), an Organic Light-Emitting Diode (OLED), or the like.

The user input unit 1107 may be used to receive inputted digital or character information and generate a key signal input related to user-setting and function control of a terminal. Specifically, the user input unit 1107 includes a touch panel 11071 and other input devices 11072. The touch panel 11071, also referred to as a touch screen, may collect a touch operation (e.g., an operation of a user using any suitable object or accessory, such as a finger, stylus, or the like, on or near the touch panel 11071) of the user on or near the touch panel 11071. The touch panel 11071 may include two parts of a touch detection device and a touch controller. The touch detection device detects a touch orientation of the user, detects a signal brought about by a touch operation, transmits the signal to the touch controller, and the touch controller receives touch information from the touch detection device, converts the touch information into contact coordinates and sends the contact coordinates to the processor 1110, and receives and executes commands from the processor 1110. In addition, the touch panel 11071 may be implemented in various types such as a resistance type, a capacitance type, an infrared ray, and a surface acoustic wave. The user input unit 1107 may include other input devices 11072 in addition to the touch panel 11071. Specifically, the other input devices 11072 may include, but are not limited to, a physical keyboard, function keys (such as volume control keys, switch keys, etc.), a trackball, a mouse, and a joystick, which will not be described herein.

Further, the touch panel 11071 may be overlaid on the display panel 11061, and after the touch panel 11071 detects a touch operation on or near the touch panel 11071, the touch operation is sent by touch panel 11071 to the processor 1110 to determine the type of a touch event. The processor 1110 then provides a corresponding visual output on the display panel 11061 according to the type of the touch event. Although in FIG. 11, the touch panel 11071 and the display panel 11061 are two separate components for implementing input and output functions of the terminal, the input and output functions of the terminal in some embodiments may be realized by integrating the touch panel 11071 with the display panel 11061, and the present disclosure is not limited thereto.

The interface unit 1108 is an interface in which an external device is connected to the user equipment 1100. For example, the external device may include a wired or wireless headset port, an external power supply (or a battery charger) port, a wired or wireless data port, a memory card port, a port for connecting a device having an identification module, an audio input/output (I/O) port, a video I/O port, a headphone port, and so on. The interface unit 1108 may be used to receive input (e.g., data information, power, etc.) from an external device and transmit the received input to one or more elements within the user equipment 1100 or may be used to transmit data between the user terminal 1100 and the external device.

The storage 1109 may be used to store software programs and various types of data. The storage 1109 may mainly include a storage program area and a storage data area, wherein, the storage program area may store an operating system, an application program required by at least one function (such as a sound playing function, an image playing function, etc.), and the like; the storage data area may store data (such as audio data, a phonebook, etc.) created according to a use condition of the mobile phone. In addition, the storage 1109 may include a high speed random access memory, and may also include a non-volatile memory, such as at least one disk storage device, a flash memory device, or other volatile solid state storage device.

The processor 1110 is a console of the terminal, connects various parts of the entirety of the terminal using various interfaces and lines, and executes various functions and processes data of the terminal by running or executing software programs and/or modules stored in the storage 1109, and by calling data stored in the storage 1109, thereby integrally monitoring the terminal. The processor 1110 may include one or more processing units; optionally, the processor 1110 may integrate an application processor and a modem processor, wherein the application processor primarily processes an operating system, a user interface, an application program, etc. The modem processor mainly handles wireless communication. It will be appreciated that the above-described modem processor may also not be integrated into the processor 1110.

The user terminal 1100 may also include a power supply 1111 (such as a battery) that supplies power to various components, optionally, the power supply 1111 may be logically connected to the processor 1110 via a power management system. Thus, functions such as charging, discharging, and power consumption management are managed by the power management system.

In addition, the user terminal 1100 includes some functional modules (not shown), which will not be described here.

Optionally, the embodiments of the present disclosure also provide a terminal. The terminal includes a processor 1110, a storage 1109, a computer program stored on the storage 1109 and executable on the processor 1110, wherein when the computer program is executed by the processor 1110, each process of the above-described embodiments of the interference processing method is realized, and the same technical effect can be achieved, and the description thereof is omitted here to avoid repetition.

Referring to FIG. 12, FIG. 12 is a structural diagram of another network-side device provided by some embodiments of the present disclosure. As shown in FIG. 12, the network-side device 1200 includes a processor 1201, a transceiver 1202, a storage 1203, and a bus interface.

The transceiver 1202 is used for receiving interference-cancellation assistance information sent by a user terminal; and sending interference-cancellation configuration information to the user terminal according to the interference-cancellation assistance information, wherein, the interference-cancellation configuration information includes at least one of configuration information for stopping uplink transmission and configuration information for stopping downlink reception.

Optionally, the configuration information for stopping uplink transmission includes at least one of following: time-domain information for stopping uplink transmission, frequency-domain information for stopping uplink transmission, space-domain information for stopping uplink transmission, and indication information of an uplink channel of which uplink transmission is stopped; the configuration information for stopping downlink reception includes at least one of following: time-domain information for stopping downlink reception, frequency-domain information for stopping downlink reception, space-domain information for stopping downlink reception, and indication information of a downlink channel of which downlink reception is stopped.

Optionally, the time-domain information for stopping uplink transmission includes at least one of following: a slot identifier, a subframe identifier, an SFN identifier, and bitmap information; the time-domain information for stopping downlink reception includes at least one of following: a slot identifier, a subframe identifier, an SFN identifier, and bitmap information.

Each bit of the bitmap information in the time-domain information for stopping uplink transmission or the bitmap information in the time-domain information for stopping downlink reception corresponds to a time-domain index, and the time-domain index includes at least one of a slot identifier, a subframe identifier, and an SFN identifier.

Optionally, the frequency-domain information for stopping uplink transmission includes at least one of a frequency identifier, a bandwidth range, a BWP identifier, a cell identifier, and a cell group identifier; the frequency-domain information for stopping downlink reception includes at least one of a frequency identifier, a bandwidth range, a BWP identifier, a cell identifier, and a cell group identifier.

The space-domain information for stopping uplink transmission includes at least one of a beam identifier, a beam pair identifier, an SSB identifier, a CSI-RS identifier, and a QCL identifier; the space-domain information for stopping downlink reception includes at least one of a beam identifier, a beam pair identifier, an SSB identifier, a CSI-RS identifier, and a QCL identifier.

The uplink channel of which uplink transmission is stopped includes at least one of a PUCCH, a PUSCH, a PRACH, and an SRS channel; the downlink channel of which downlink reception is stopped includes at least one of a PDCCH, a PDSCH, and a PBCH.

Optionally, before receiving the interference-cancellation assistance information sent by the user terminal, the transceiver 1202 is further used for sending report configuration information of the interference-cancellation assistance information to the user terminal.

Optionally, the report configuration information includes at least one of: configuration information of a report prohibition timer of interference-cancellation assistance information, and configuration information about whether the user terminal is allowed to report the interference-cancellation assistance information.

The interference-cancellation assistance information includes space-domain assistance information, and may further include at least one of following: time-domain assistance information, frequency-domain assistance information, and indication information of an interfered radio technology.

Optionally, the time-domain assistance information includes at least one of: frequency-domain information on which the time-domain assistance information acts, space-domain information on which the time-domain assistance information acts, configuration information of downlink discontinuous reception, bitmap information of downlink reception, configuration information of uplink discontinuous transmission, and bitmap information of uplink transmission.

The frequency-domain assistance information includes at least one of following: frequency-domain identifier information of an interfered frequency and frequency-domain identifier information of an interference source.

The space-domain assistance information includes at least one of: space-domain identifier information of the interfered frequency and space-domain identifier information of an interference source.

The interfered radio technology includes at least one of a 2G technology, a 3G technology, a 4G technology, and a 5G technology.

The network-side device may also reduce IDC interference at the user terminal.

The transceiver 1202 is used for receiving and transmitting data under a control of the processor 1201, the transceiver 1202 includes at least two antenna ports.

In FIG. 12, the bus architecture may include any number of interconnected buses and bridges, specifically various circuits such as one or more processors represented by the processor 1201 and a memory represented by the storage 1203 are linked together. The bus architecture may also link together various other circuits, such as peripheral devices, voltage regulators, and power management circuits, which are well known in the art, and thus will not be described further herein. The bus interface provides an interface. The transceiver 1202 may be a plurality of elements, i.e., including a transmitter and a receiver, for providing elements for communicating with various other devices over a transmission medium. For different user devices, the user interface 1204 may also be an interface capable of externally or internally interfacing with a desired device, including, but not limited to, a keypad, a display, a speaker, a microphone, a joystick, etc.

The processor 1201 is responsible for managing the bus architecture and general processing, and the storage 1203 may store data used by the processor 1201 when performing operations.

Optionally, the embodiments of the present disclosure also provide a network-side device. The network-side device includes a processor 1201, a storage 1203, a computer program stored on the storage 1203 and executable by the processor 1201, wherein when the computer program is executed by the processor 1201, the processor 1201 implements each process of the above-described embodiments of the interference processing method, and the same technical effect can be achieved. Description thereof is not described herein in order to avoid repetition.

Some embodiments of the present disclosure further provide a computer readable storage medium, on which a computer program is stored. When the computer program is executed by a processor, the processor implements various processes of the embodiments in the interference processing method at a user terminal side; or when the computer program is executed by a processor, the processor implements various processes of the embodiments in the interference processing method at a network-side device side, and the same technical effect can be achieved, and description thereof will not be repeated here in order to avoid repetition. The computer readable storage medium is, for example, a Read-Only Memory (ROM), a Random Access Memory (RAM), a magnetic disk or an optical disk.

It should be noted that in this context, such terms as "include", "comprise", or any other variation thereof are intended to encompass non-exclusive inclusion, so that processes, methods, articles or devices including a series of elements include not only those elements but also other elements not explicitly listed, or may also include elements inherent to such processes, methods, articles, or devices. In absence of further limitations, an element after a statement "including one" do not exclude existence of another identical element in a process, a method, an article, or a device that includes the element.

From the above description of the embodiments, it will be apparent to those skilled in the art that methods in the above embodiments may be implemented by means of software plus a common necessary hardware platform, and of course may also be implemented by hardware, but in many cases the former is a better implementation. Based on such an understanding, an essential part or a part contributing the related art in technical solutions of the present disclosure may be embodied in a form of a software product. The computer software product is stored in a storage medium such as an ROM/RAM, a magnetic disk, an optical disk, and includes instructions for enabling a terminal (which may be a mobile phone, a computer, a server, an air conditioner, or a network device or the like) to perform the methods described in various embodiments of the present disclosure.

## Claims

1. An interference processing method performed by a user terminal, the method comprising:
sending (201) interference-cancellation assistance information to a network-side device;
receiving (202) interference-cancellation configuration information sent by the network-side device according to the interference-cancellation assistance information, wherein, the interference-cancellation configuration information comprises at least one of configuration information for stopping uplink transmission and configuration information for stopping downlink reception; and
in case that interference occurs, performing (203) an interference processing behavior according to the interference-cancellation configuration information, wherein the interference processing behavior comprises at least one of stopping uplink transmission and stopping downlink reception;
**characterized in that**,
the configuration information for stopping uplink transmission comprises at least one of: space-domain information for stopping uplink transmission and indication information of an uplink channel of which uplink transmission is stopped;
the configuration information for stopping downlink reception comprises at least one of: space-domain information for stopping downlink reception and indication information of a downlink channel of which downlink reception is stopped;
and,
the interference-cancellation assistance information comprises space-domain assistance information.

2. The method according to claim 1, wherein the configuration information for stopping uplink transmission further comprises at least one of following:
time-domain information for stopping uplink transmission, and frequency-domain information for stopping uplink transmission;
the configuration information for stopping downlink reception further comprises at least one of following:
time-domain information for stopping downlink reception, and frequency-domain information for stopping downlink reception.

3. The method according to claim 2, wherein the time-domain information for stopping uplink transmission comprises at least one of following: a slot identifier, a subframe identifier, a System Frame Number, SFN, identifier, and bitmap information;
the time-domain information for stopping downlink reception comprises at least one of following: a slot identifier, a subframe identifier, an SFN identifier, and bitmap information;
each bit of the bitmap information in the time-domain information for stopping uplink transmission or the bitmap information in the time-domain information for stopping downlink reception corresponds to a time-domain index, and the time-domain index comprises at least one of a slot identifier, a subframe identifier, and an SFN identifier;
the frequency-domain information for stopping uplink transmission comprises at least one of a frequency identifier, a bandwidth range, a Bandwidth Part, BWP, identifier, a cell identifier, and a cell group identifier;
the frequency-domain information for stopping downlink reception comprises at least one of a frequency identifier, a bandwidth range, a BWP identifier, a cell identifier, and a cell group identifier;
the space-domain information for stopping uplink transmission comprises at least one of following: a beam identifier, a beam pair identifier, a Synchronization Signal Block, SSB, identifier, a Channel State Information Reference Signal, CSI-RS, identifier, and a Quasi Co-Location, QCL, identifier;
the space-domain information for stopping downlink reception comprises at least one of a beam identifier, a beam pair identifier, an SSB identifier, a CSI-RS identifier, and a QCL identifier;
the uplink channel of which uplink transmission is stopped comprises at least one of a Physical Uplink Control Channel, PUCCH, a Physical Uplink Shared Channel, PUSCH, a Physical Random Access Channel, PRACH, and a Sounding Reference Signal, SRS, channel;
the downlink channel of which downlink reception is stopped comprises at least one of a Physical Downlink Control Channel, PDCCH, a Physical Downlink Shared Channel, PDSCH, and a Physical Broadcast Channel, PBCH.

4. The method according to any one of claims 1 to 3, wherein before sending (201) the interference-cancellation assistance information to the network-side device, the method further comprises receiving report configuration information, sent by the network-side device, of interference-cancellation assistance information;
sending the interference-cancellation assistance information to the network-side device comprises sending the interference-cancellation assistance information to the network-side device according to the report configuration information.

5. The method according to claim 4, wherein the report configuration information comprises at least one of following:
configuration information of a report prohibition timer of the interference-cancellation assistance information, and configuration information about whether the user terminal is allowed to report the interference-cancellation assistance information;
and/or,
the interference-cancellation assistance information sent to the network-side device further comprises at least one of following:
time-domain assistance information, frequency-domain assistance information and indication information of an interfered radio technology.

6. The method according to claim 5, wherein, if the report configuration information comprises the configuration information of the report prohibition timer of the interference-cancellation assistance information, then after sending the interference-cancellation assistance information to the network-side device according to the report configuration information, the method further comprises:
starting or restarting the report prohibition timer, wherein the user terminal is prohibited from reporting the interference-cancellation assistance information during a running period of the timer.

7. The method according to claim 5, wherein, the time-domain assistance information comprises at least one of following: frequency-domain information on which the time-domain assistance information acts, space-domain information on which the time-domain assistance information acts, configuration information of downlink discontinuous reception, bitmap information of downlink reception, configuration information of uplink discontinuous transmission, and bitmap information of uplink transmission;
the frequency-domain assistance information comprises at least one of following: frequency-domain identifier information of an interfered frequency and frequency-domain identifier information of an interference source;
the space-domain assistance information comprises at least one of following: space-domain identifier information of an interfered frequency and space-domain identifier information of an interference source;
the interfered radio technology comprises at least one of a second generation, 2G, technology, a third generation, 3G, technology, a fourth generation, 4G, technology, and a fifth generation, 5G, technology.

8. The method according to any one of claims 1 to 7, wherein, sending (201) the interference-cancellation assistance information to the network-side device, comprises:
if the interference-cancellation assistance information is changed, then sending the interference-cancellation assistance information to the network-side device.

9. An interference processing method performed by a network-side device, the method comprising:
receiving (401) interference-cancellation assistance information sent by a user terminal; and
sending (402) interference-cancellation configuration information to the user terminal according to the interference-cancellation assistance information, wherein, the interference-cancellation configuration information comprises at least one of configuration information for stopping uplink transmission and configuration information for stopping downlink reception;
**characterized in that**,
the configuration information for stopping uplink transmission comprises at least one of: space-domain information for stopping uplink transmission and indication information of an uplink channel of which uplink transmission is stopped;
the configuration information for stopping downlink reception comprises at least one of: space-domain information for stopping downlink reception and indication information of a downlink channel of which downlink reception is stopped;
and,
the interference-cancellation assistance information comprises space-domain assistance information.

10. The method according to claim 9, wherein the configuration information for stopping uplink transmission further comprises at least one of following: time-domain information for stopping uplink transmission, and frequency-domain information for stopping uplink transmission;
the configuration information for stopping downlink reception further comprises at least one of following: time-domain information for stopping downlink reception, and frequency-domain information for stopping downlink reception.

11. The method according to claim 10, wherein the time-domain information for stopping uplink transmission comprises at least one of following: a slot identifier, a subframe identifier, a System Frame Number, SFN, identifier, and bitmap information;
the time-domain information for stopping downlink reception comprises at least one of following: a slot identifier, a subframe identifier, an SFN identifier, and bitmap information;
wherein each bit of the bitmap information in the time-domain information for stopping uplink transmission or the bitmap information in the time-domain information for stopping downlink reception corresponds to a time-domain index, and the time-domain index comprises at least one of following: a slot identifier, a subframe identifier, and an SFN identifier;
the frequency-domain information for stopping uplink transmission comprises at least one of following: a frequency identifier, a bandwidth range, a Bandwidth Part, BWP, identifier, a cell identifier, and a cell group identifier;
the frequency-domain information for stopping downlink reception comprises at least one of following: a frequency identifier, a bandwidth range, a BWP identifier, a cell identifier, and a cell group identifier;
the space-domain information for stopping uplink transmission comprises at least one of following: a beam identifier, a beam pair identifier, a Synchronization Signal Block, SSB, identifier, a Channel State Information Reference Signal, CSI-RS, identifier, and a Quasi Co-Location, QCL, identifier;
the space-domain information for stopping downlink reception comprises at least one of following: a beam identifier, a beam pair identifier, an SSB identifier, a CSI-RS identifier, and a QCL identifier;
the uplink channel of which uplink transmission is stopped comprises at least one of following: a Physical Uplink Control Channel, PUCCH, a Physical Uplink Shared Channel, PUSCH, a Physical Random Access Channel, PRACH, and a Sounding Reference Signal, SRS, channel;
the downlink channel of which downlink reception is stopped comprises at least one of a Physical Downlink Control Channel, PDCCH, a Physical Downlink Shared Channel, PDSCH, and a Physical Broadcast Channel, PBCH.

12. The method according to any one of claims 9 to 11, wherein before receiving (401) the interference-cancellation assistance information sent by the user terminal, the method further comprising:
sending report configuration information of the interference-cancellation assistance information to the user terminal.

13. The method according to claim 12, wherein the report configuration information comprises at least one of following:
configuration information of a report prohibition timer of interference-cancellation assistance information, and configuration information about whether the user terminal is allowed to report the interference-cancellation assistance information;
and/or,
the interference-cancellation assistance information further comprises at least one of following:
time-domain assistance information, frequency-domain assistance information and indication information of an interfered radio technology.

14. A user terminal, comprising:
a sending module (601), used for sending interference-cancellation assistance information to a network-side device;
a first receiving module (602), used for receiving interference-cancellation configuration information sent by the network-side device according to the interference-cancellation assistance information, wherein, the interference-cancellation configuration information comprises at least one of configuration information for stopping uplink transmission and configuration information for stopping downlink reception; and
a performing module (603), used for, in case that interference occurs, performing an interference processing behavior according to the interference-cancellation configuration information, wherein the interference processing behavior comprises at least one of stopping uplink transmission and stopping downlink reception;
**characterized in that**,
the configuration information for stopping uplink transmission comprises at least one of: space-domain information for stopping uplink transmission and indication information of an uplink channel of which uplink transmission is stopped;
the configuration information for stopping downlink reception comprises at least one of: space-domain information for stopping downlink reception and indication information of a downlink channel of which downlink reception is stopped;
and,
the interference-cancellation assistance information comprises space-domain assistance information.

15. A network-side device, comprising:
a receiving module (901), used for receiving interference-cancellation assistance information sent by a user terminal; and
a first sending module (902), used for sending interference-cancellation configuration information to the user terminal according to the interference-cancellation assistance information, wherein, the interference-cancellation configuration information comprises at least one of configuration information for stopping uplink transmission and configuration information for stopping downlink reception;
**characterized in that**,
the configuration information for stopping uplink transmission comprises at least one of: space-domain information for stopping uplink transmission and indication information of an uplink channel of which uplink transmission is stopped;
the configuration information for stopping downlink reception comprises at least one of: space-domain information for stopping downlink reception and indication information of a downlink channel of which downlink reception is stopped;
and,
the interference-cancellation assistance information comprises space-domain assistance information.

## Patentansprüche

1. Störungsverarbeitungsverfahren, ausgeführt von einem Benutzerendgerät, das Verfahren umfassend:
Senden (201) von Störungsbeseitigung-Unterstützungsinformationen an eine netzwerkseitige Vorrichtung;
Empfangen (202) von Störungsbeseitigung-Konfigurationsinformationen, die von der netzwerkseitigen Vorrichtung gemäß den Störungsbeseitigung-Unterstützungsinformationen gesendet werden, wobei die Störungsbeseitigung-Konfigurationsinformationen mindestens eines von Konfigurationsinformationen zum Anhalten von Uplink-Übertragung und Konfigurationsinformationen zum Anhalten von Downlink-Empfang umfassen; und
für den Fall, dass eine Störung auftritt, Ausführen (203) eines Störungsverarbeitungsverhaltens gemäß den Störungsbeseitigung-Konfigurationsinformationen, wobei das Störungsverarbeitungsverhalten mindestens eines von Anhalten von Uplink-Übertragung und Anhalten von Downlink-Empfang umfasst;
**dadurch gekennzeichnet, dass**
die Konfigurationsinformationen zum Anhalten von Uplink-Übertragung mindestens eines von Folgenden umfassen: Raumbereichsinformationen zum Anhalten von Uplink-Übertragung und Angabeinformationen eines Uplink-Kanals, dessen Uplink-Übertragung angehalten wird;
wobei die Konfigurationsinformationen zum Anhalten von Downlink-Empfang mindestens eines von Folgenden umfassen: Raumbereichsinformationen zum Anhalten von Downlink-Empfang und Anzeigeinformationen eines Downlink-Kanals, dessen Downlink-Empfang angehalten wird;
und
wobei die Störungsbeseitigung-Unterstützungsinformationen Raumbereich-Unterstützungsinformationen umfassen.

2. Verfahren nach Anspruch 1, wobei die Konfigurationsinformationen zum Anhalten von Uplink-Übertragung ferner mindestens eines von Folgenden umfassen:
Zeitbereichsinformationen zum Anhalten von Uplink-Übertragung und Frequenzbereichsinformationen zum Anhalten von Uplink-Übertragung;
wobei die Konfigurationsinformationen zum Anhalten von Downlink-Empfang ferner mindestens eines von Folgenden umfassen:
Zeitbereichsinformationen zum Anhalten von Downlink-Empfang und Frequenzbereichsinformationen zum Anhalten von Downlink-Empfang;

3. Verfahren nach Anspruch 2, wobei die Zeitbereichsinformationen zum Anhalten von Uplink-Übertragung mindestens eines von Folgenden umfassen: eine Schlitzkennung, eine Teilrahmenkennung, eine Kennung für Systemrahmennummer, SFN, und Bitmap-Informationen;
wobei die Zeitbereichsinformationen zum Anhalten von Downlink-Empfang mindestens eines von Folgenden umfassen: eine Schlitzkennung, eine Teilrahmenkennung, eine SFN-Kennung, und Bitmap-Informationen;
wobei jedes Bit der Bitmap-Information in den Zeitbereichsinformationen zum Anhalten von Uplink-Übertragung oder der Bitmap-Information in den Zeitbereichsinformationen zum Anhalten von Downlink-Empfang einem Zeitbereichsindex entspricht, und der Zeitbereichsindex mindestens eine von einer Schlitzkennung, einer Teilrahmenkennung und einer SFN-Kennung umfasst;
wobei die Frequenzbereichsinformationen zum Anhalten von Uplink-Übertragung mindestens eines von einer Frequenzkennung, einem Bandbreitenbereich, einer Kennung eines Bandbreitenanteils, BWP, einer Zellenkennung und einer Zellengruppenkennung umfassen;
wobei die Frequenzbereichsinformationen zum Anhalten von Downlink-Empfang mindestens eines von einer Frequenzkennung, einem Bandbreitenbereich, eine BWP-Kennung, einer Zellenkennung und einer Zellengruppenkennung umfassen;
wobei die Raumbereichsinformationen zum Anhalten von Uplink-Übertragung mindestens eines von Folgenden umfassen: einer Strahlkennung, einer Strahlpaarkennung, einer Kennung eines Synchronisationssignalblocks, SSB, einer Kennung eines Kanalzustandsinformation-Referenzsignals, CSI-RS, und einer Kennung von Quasi-Co-Location, QCL;
wobei die Raumbereichsinformationen zum Anhalten von Downlink-Empfang mindestens eine von einer Strahlkennung, einer Strahlpaarkennung, einer SSB-Kennung, einer CSI-RS-Kennung und einer QCL-Kennung umfassen;
wobei der Uplink-Kanal, dessen Uplink-Übertragung angehalten wird, mindestens eines von einem physischen Uplink-Steuerkanal, PUCCH, einem physischen geteilten Uplink-Kanal, PUSCH, einem physischen wahlfreien Zugriffskanal, PRACH, und einem Kanal für Sondierungsreferenzsignalen, SRS, umfasst;
wobei der Downlink-Kanal, dessen Downlink-Empfang angehalten wird, mindestens einen von einem physischen Downlink-Steuerkanal, PDCCH, einem physischen geteilten Downlink-Kanal, PDSCH und einem physischen Ausstrahlungskanal, PBCH, umfasst.

4. Verfahren nach einem der Ansprüche 1 bis 3, wobei das Verfahren vor einem Senden (201) der Störungsbeseitigung-Unterstützungsinformationen an die netzwerkseitige Vorrichtung ferner ein Empfangen von Meldungskonfigurationsinformationen, die von der netzwerkseitigen Vorrichtung gesendet werden, von Störungsbeseitigung-Unterstützungsinformationen umfasst;
wobei ein Senden der Störungsbeseitigung-Unterstützungsinformationen an die netzwerkseitige Vorrichtung ein Senden der Störungsbeseitigung-Unterstützungsinformationen an die netzwerkseitige Vorrichtung gemäß den Meldungskonfigurationsinformationen umfasst.

5. Verfahren nach Anspruch 4, wobei die Meldungskonfigurationsinformationen mindestens eines von Folgenden umfassen:
Konfigurationsinformationen eines Meldungsverbot-Zeitgebers der Störungsbeseitigung-Unterstützungsinformationen, und Konfigurationsinformationen darüber, ob dem Benutzerendgerät erlaubt ist, die Störungsbeseitigung-Unterstützungsinformationen zu melden;
und/oder
wobei die Störungsbeseitigung-Unterstützungsinformationen, die an die netzwerkseitige Vorrichtung gesendet werden, ferner mindestens eines von Folgenden umfassen:
Zeitbereich-Unterstützungsinformationen, Frequenzbereich-Unterstützungsinformationen und Angabeinformationen einer gestörten Funktechnologie.

6. Verfahren nach Anspruch 5, wobei, wenn die Meldungskonfigurationsinformationen die Konfigurationsinformationen des Meldungsverbot-Zeitgebers der Störungsbeseitigung-Unterstützungsinformationen umfassen, das Verfahren nach Senden der Störungsbeseitigung-Unterstützungsinformationen an die netzwerkseitige Vorrichtung gemäß den Meldungskonfigurationsinformationen, das Verfahren ferner Folgendes umfasst:
Starten oder Neustarten des Meldungsverbot-Zeitgebers, wobei es dem Benutzerendgerät untersagt ist, die Störungsbeseitigung-Unterstützungsinformationen während einer Laufzeit des Zeitgebers zu melden.

7. Verfahren nach Anspruch 5, wobei die Zeitbereich-Unterstützungsinformationen mindestens eines von Folgenden umfassen: Frequenzbereichsinformationen, auf die die Zeitbereich-Unterstützungsinformationen wirken, Raumbereichsinformationen, auf die die Zeitbereich-Unterstützungsinformationen wirken, Konfigurationsinformationen für diskontinuierlichen Downlink-Empfang, Bitmap-Informationen für Downlink-Empfang, Konfigurationsinformationen für diskontinuierliche Uplink-Übertragung und Bitmap-Informationen für Uplink-Übertragung;
wobei die Frequenzbereich-Unterstützungsinformationen mindestens eines von Folgenden umfassen: Frequenzbereich-Kennungsinformationen einer gestörten Frequenz und Frequenzbereich-Kennungsinformationen einer Störquelle;
wobei die Raumbereich-Unterstützungsinformationen mindestens eines von Folgenden umfassen: Raumbereich-Kennungsinformationen einer gestörten Frequenz und Raumbereich-Kennungsinformationen einer Störquelle;
wobei die gestörte Funktechnologie mindestens eine einer Technologie der zweiten Generation 2G, einer Technologie der dritten Generation 3G, einer Technologie der vierten Generation 4G oder einer Technologie der fünften Generation 5G umfasst.

8. Verfahren nach einem der Ansprüche 1 bis 7, wobei ein Senden (201) der Störungsbeseitigung-Unterstützungsinformationen an die netzwerkseitige Vorrichtung Folgendes umfasst:
wenn die Störungsbeseitigung-Unterstützungsinformationen geändert werden, dann Senden der Störungsbeseitigung-Unterstützungsinformationen an die netzwerkseitige Vorrichtung.

9. Störungsverarbeitungsverfahren, das von einer netzwerkseitigen Vorrichtung ausgeführt wird, das Verfahren umfassend:
Empfangen (401) von Störungsbeseitigung-Unterstützungsinformationen, die von einem Benutzerendgerät gesendet werden; und
Senden (402) von Störungsbeseitigung-Konfigurationsinformationen an das Benutzerendgerät gemäß den Störungsbeseitigung-Unterstützungsinformationen, wobei die Störungsbeseitigung-Konfigurationsinformationen mindestens eines von Konfigurationsinformationen zum Anhalten von Uplink-Übertragung und Konfigurationsinformationen zum Anhalten von Downlink-Empfang umfassen;
**dadurch gekennzeichnet, dass**
die Konfigurationsinformationen zum Anhalten von Uplink-Übertragung mindestens eines von Folgenden umfassen: Raumbereichsinformationen zum Anhalten von Uplink-Übertragung und Angabeinformationen eines Uplink-Kanals, dessen Uplink-Übertragung angehalten wird;
wobei die Konfigurationsinformationen zum Anhalten von Downlink-Empfang mindestens eines von Folgenden umfassen: Raumbereichsinformationen zum Anhalten von Downlink-Empfang und Anzeigeinformationen eines Downlink-Kanals, dessen Downlink-Empfang angehalten wird;
und
wobei die Störungsbeseitigung-Unterstützungsinformationen Raumbereich-Unterstützungsinformationen umfassen.

10. Verfahren nach Anspruch 9, wobei die Konfigurationsinformationen zum Anhalten von Uplink-Übertragung ferner mindestens eines von Folgenden umfassen:
Zeitbereichsinformationen zum Anhalten von Uplink-Übertragung und Frequenzbereichsinformationen zum Anhalten von Uplink-Übertragung;
wobei die Konfigurationsinformationen zum Anhalten von Downlink-Empfang ferner mindestens eines von Folgenden umfassen: Zeitbereichsinformationen zum Anhalten von Downlink-Empfang und Frequenzbereichsinformationen zum Anhalten von Downlink-Empfang.

11. Verfahren nach Anspruch 10, wobei die Zeitbereichsinformationen zum Anhalten von Uplink-Übertragung mindestens eines von Folgenden umfassen: eine Schlitzkennung, eine Teilrahmenkennung, eine Kennung für Systemrahmennummer, SFN, und Bitmap-Informationen;
wobei die Zeitbereichsinformationen zum Anhalten von Downlink-Empfang mindestens eines von Folgenden umfassen: eine Schlitzkennung, eine Teilrahmenkennung, eine SFN-Kennung, und Bitmap-Informationen;
wobei jedes Bit der Bitmap-Information in den Zeitbereichsinformationen zum Anhalten von Uplink-Übertragung oder der Bitmap-Information in den Zeitbereichsinformationen zum Anhalten von Downlink-Empfang einem Zeitbereichsindex entspricht, und der Zeitbereichsindex mindestens eine von Folgenden umfasst: einer Schlitzkennung, einer Teilrahmenkennung und einer SFN-Kennung;
wobei die Frequenzbereichsinformationen zum Anhalten von Uplink-Übertragung mindestens eines von Folgenden umfassen: einer Frequenzkennung, einem Bandbreitenbereich, einer Kennung eines Bandbreitenanteils, BWP, einer Zellenkennung und einer Zellengruppenkennung;
wobei die Frequenzbereichsinformationen zum Anhalten von Downlink-Empfang mindestens eines von Folgenden umfassen: einer Frequenzkennung, einem Bandbreitenbereich, eine BWP-Kennung, einer Zellenkennung und einer Zellengruppenkennung;
wobei die Raumbereichsinformationen zum Anhalten von Uplink-Übertragung mindestens eines von Folgenden umfassen: einer Strahlkennung, einer Strahlpaarkennung, einer Kennung eines Synchronisationssignalblocks, SSB, einer Kennung eines Kanalzustandsinformation-Referenzsignals, CSI-RS, und einer Kennung von Quasi-Co-Location, QCL;
wobei die Raumbereichsinformationen zum Anhalten von Downlink-Empfang mindestens eines von Folgenden umfassen: einer Strahlkennung, einer Strahlpaar-Kennung, einer SSB-Kennung, einer CSI-RS-Kennung und einer QCL-Kennung;
wobei der Uplink-Kanal, dessen Uplink-Übertragung angehalten wird, mindestens eines von Folgenden umfasst: einem physischen Uplink-Steuerkanal, PUCCH, einem physischen geteilten Uplink-Kanal, PUSCH, einem physischen wahlfreien Zugriffskanal, PRACH, und einem Kanal für Sondierungsreferenzsignalen, SRS;
wobei der Downlink-Kanal, dessen Downlink-Empfang angehalten wird, mindestens einen von einem physischen Downlink-Steuerkanal, PDCCH, einem physischen geteilten Downlink-Kanal, PDSCH und einem physischen Ausstrahlungskanal, PBCH, umfasst.

12. Verfahren nach einem der Ansprüche 9 bis 11, wobei das Verfahren vor Empfangen (401) der von dem Benutzerendgerät gesendeten Störungsbeseitigung-Unterstützungsinformationen fernes Folgendes umfasst:
Senden von Meldungskonfigurationsinformationen der Störungsbeseitigung-Unterstützungsinformationen an das Benutzerendgerät.

13. Verfahren nach Anspruch 12, wobei die Meldungskonfigurationsinformationen mindestens eines von Folgenden umfassen:
Konfigurationsinformationen eines Meldungsverbot-Zeitgebers von Störungsbeseitigung-Unterstützungsinformationen, und Konfigurationsinformationen darüber, ob dem Benutzerendgerät erlaubt ist Störungsbeseitigung-Unterstützungsinformationen zu melden;
und/oder
wobei die Störungsbeseitigung-Unterstützungsinformationen ferner mindestens eines von Folgenden umfassen:
Zeitbereich-Unterstützungsinformationen, Frequenzbereich-Unterstützungsinformationen und Angabeinformationen einer gestörten Funktechnologie.

14. Mobiles Endgerät, umfassend:
ein Sendemodul (601), das zum Senden von Störungsbeseitigung-Unterstützungsinformationen an eine netzwerkseitige Vorrichtung verwendet wird;
ein erstes Empfangsmodul (602), das zum Empfangen von Störungsbeseitigungs-Konfigurationsinformationen verwendet wird, die von der netzwerkseitigen Vorrichtung gemäß den Störungsbeseitigungs-Unterstützungsinformationen gesendet werden, wobei die Störungsbeseitigungs-Konfigurationsinformationen mindestens eines von Konfigurationsinformationen zum Anhalten von Uplink-Übertragung und Konfigurationsinformationen zum Anhalten von Downlink-Empfang umfassen; und
ein Ausführungsmodul (603), das verwendet wird, um im Falle des Auftretens von Störungen ein Störungsverarbeitungsverhalten gemäß den Störungsbeseitigung-Konfigurationsinformationen auszuführen, wobei das Störungsverarbeitungsverhalten mindestens eines von Anhalten von Uplink-Übertragung und Anhalten von Downlink-Empfang umfasst;
**dadurch gekennzeichnet, dass**
die Konfigurationsinformationen zum Anhalten von Uplink-Übertragung mindestens eines von Folgenden umfassen: Raumbereichsinformationen zum Anhalten von Uplink-Übertragung und Angabeinformationen eines Uplink-Kanals, dessen Uplink-Übertragung angehalten wird;
wobei die Konfigurationsinformationen zum Anhalten von Downlink-Empfang mindestens eines von Folgenden umfassen: Raumbereichsinformationen zum Anhalten von Downlink-Empfang und Anzeigeinformationen eines Downlink-Kanals, dessen Downlink-Empfang angehalten wird;
und
wobei die Störungsbeseitigung-Unterstützungsinformationen Raumbereich-Unterstützungsinformationen umfassen.

15. Netzseitige Vorrichtung, umfassend:
ein Empfangsmodul (901), das zum Empfangen von Störungsbeseitigung-Unterstützungsinformationen verwendet wird, die von einem Benutzerendgerät gesendet werden; und
ein erstes Sendemodul (902), das zum Senden von Störungsunterdrückung-Konfigurationsinformationen an das Benutzerendgerät gemäß den Störungsbeseitigung-Unterstützungsinformationen verwendet wird, wobei die Störungsbeseitigung-Konfigurationsinformationen mindestens eines von Konfigurationsinformationen zum Anhalten von Uplink-Übertragung und Konfigurationsinformationen zum Anhalten von Downlink-Empfang umfassen;
**dadurch gekennzeichnet, dass**
die Konfigurationsinformationen zum Anhalten von Uplink-Übertragung mindestens eines von Folgenden umfassen: Raumbereichsinformationen zum Anhalten von Uplink-Übertragung und Angabeinformationen eines Uplink-Kanals, dessen Uplink-Übertragung angehalten wird;
wobei die Konfigurationsinformationen zum Anhalten von Downlink-Empfang mindestens eines von Folgenden umfassen: Raumbereichsinformationen zum Anhalten von Downlink-Empfang und Anzeigeinformationen eines Downlink-Kanals, dessen Downlink-Empfang angehalten wird;
und
wobei die Störungsbeseitigung-Unterstützungsinformationen Raumbereich-Unterstützungsinformationen umfassen.

## Revendications

1. Procédé de traitement des interférences exécuté par un terminal utilisateur, le procédé comprenant :
envoyer (201) des informations d'assistance à la suppression des interférences à un dispositif côté réseau ;
recevoir (202) des informations de configuration de suppression des interférences envoyées par le dispositif côté réseau selon les informations d'assistance à la suppression des interférences, dans lequel les informations de configuration de suppression des interférences comprennent au moins l'un des éléments suivants : des informations de configuration pour arrêter la transmission de liaison montante et des informations de configuration pour arrêter la réception de liaison descendante ; et
dans le cas où des interférences se produisent, exécuter (203) un comportement de traitement des interférences selon les informations de configuration de suppression des interférences, dans lequel le comportement de traitement des interférences comprend au moins l'un de l'arrêt de la transmission de liaison montante et de l'arrêt de la réception de liaison descendante ;
**caractérisé en ce que**,
les informations de configuration pour arrêter la transmission ascendante comprennent au moins l'un des éléments suivants : des informations du domaine spatial pour arrêter la transmission ascendante et des informations d'indication d'un canal de liaison montante dont la transmission de liaison montante est arrêtée ;
les informations de configuration pour arrêter la réception de liaison descendante comprennent au moins l'un des éléments suivants : des informations du domaine spatial pour arrêter la réception de liaison descendante et des informations d'indication d'un canal de liaison descendante dont la réception de liaison descendante est arrêtée ;
et,
les informations d'assistance à la suppression des interférences comprennent des informations d'assistance du domaine spatial.

2. Procédé selon la revendication 1, dans lequel les informations de configuration pour arrêter la transmission de liaison montante comprennent en outre au moins l'un des éléments suivants :
des informations du domaine temporel pour arrêter la transmission de liaison montante, et des informations du domaine fréquentiel pour arrêter la transmission de liaison montante ;
des informations de configuration pour arrêter la réception de liaison descendante comprennent en outre au moins l'un des éléments suivants :
des informations du domaine temporel pour arrêter la réception de liaison descendante, et des informations du domaine fréquentiel pour arrêter la réception de liaison descendante.

3. Procédé selon la revendication 2, dans lequel les informations du domaine temporel pour arrêter la transmission de liaison montante comprennent au moins l'un des éléments suivants : un identifiant de créneau, un identifiant de sous-trame, un identifiant de numéro de trame système, SFN, et des informations de bitmap ;
les informations du domaine temporel pour arrêter la réception de liaison descendante comprennent au moins l'un des éléments suivants : un identifiant de créneau, un identifiant de sous-trame, un identifiant de SFN, et des informations de bitmap ;
chaque bit des informations de bitmap dans les informations du domaine temporel pour arrêter la transmission en liaison montante ou les informations de bitmap dans les informations du domaine temporel pour arrêter la réception de liaison descendante correspondent à un index de domaine temporel, et l'index de domaine temporel comprend au moins l'un des éléments suivants : un identifiant de créneau, un identifiant de sous-trame, et un identifiant de SFN ;
les informations du domaine fréquentiel pour arrêter la transmission de la liaison montante comprennent au moins l'un des éléments suivants : un identifiant de fréquence, une plage de largeur de bande, un identifiant de partie de largeur de bande, BWP, un identifiant de cellule et un identifiant de groupe de cellules ;
les informations du domaine fréquentiel pour arrêter la réception de liaison descendante comprennent au moins l'un des éléments suivants : un identifiant de fréquence, une plage de largeur de bande, un identifiant de BWP, un identifiant de cellule et un identifiant de groupe de cellules ;
les informations du domaine spatial pour arrêter la transmission de liaison montante comprennent au moins l'un des éléments suivants : un identifiant de faisceau, un identifiant de paire de faisceaux, un identifiant de bloc de signaux de synchronisation, SSB, un identifiant de signal de référence d'informations d'état de canal, CSI-RS, et un identifiant de quasi-colocalisation, QCL ;
les informations du domaine spatial pour arrêter la réception de liaison descendante comprennent au moins l'un des éléments suivants : un identifiant de faisceau, un identifiant de paire de faisceaux, un identifiant de SSB, un identifiant de CSI-RS et un identifiant de QCL ;
le canal de liaison montante dont la transmission de liaison montante est arrêtée comprend au moins l'un des éléments suivants : un canal de commande de liaison montante physique, PUCCH, un canal partagé de liaison montante physique, PUSCH, un canal d'accès aléatoire physique, PRACH, et un canal de signal de référence de sondage, SRS ;
le canal de liaison descendante dont la réception de liaison descendante est arrêtée comprend au moins un canal de commande de liaison descendante physique, PDCCH, un canal partagé de liaison descendante physique, PDSCH, et un canal de diffusion physique, PBCH.

4. Procédé selon l'une quelconque des revendications 1 à 3, dans lequel avant d'envoyer (201) les informations d'assistance à la suppression des interférences au dispositif côté réseau, le procédé comprend en outre la réception d'informations de configuration de rapport, envoyées par le dispositif côté réseau, des informations d'assistance à la suppression des interférences ;
l'envoi des informations d'assistance à la suppression des interférences au dispositif côté réseau comprend l'envoi des informations d'assistance à la suppression des interférences au dispositif côté réseau selon les informations de configuration de rapport.

5. Procédé selon la revendication 4, dans lequel les informations de configuration du rapport comprennent au moins l'un des éléments suivants :
des informations de configuration d'un temporisateur d'interdiction de rapport des informations d'assistance à la suppression des interférences, et des informations de configuration indiquant si le terminal utilisateur est autorisé à rapporter les informations d'assistance à la suppression des interférences ;
et/ou,
des informations d'assistance à la suppression des interférences envoyées au dispositif côté réseau comprennent en outre au moins l'un des éléments suivants :
des informations d'assistance du domaine temporel, des informations d'assistance du domaine fréquentiel et des informations d'indication d'une technologie radio perturbée.

6. Procédé selon la revendication 5, dans lequel, si les informations de configuration de rapport comprennent les informations de configuration du temporisateur d'interdiction de rapport des informations d'assistance à la suppression des interférences, alors après avoir envoyé les informations d'assistance à la suppression des interférences au dispositif côté réseau selon les informations de configuration de rapport, le procédé comprend en outre :
le démarrage ou le redémarrage du temporisateur d'interdiction de rapport, dans lequel le terminal utilisateur est interdit de rapporter les informations d'assistance à la suppression des interférences pendant une période de fonctionnement du temporisateur.

7. Procédé selon la revendication 5, dans lequel les informations d'assistance du domaine temporel comprennent au moins l'un des éléments suivants : des informations du domaine fréquentiel sur lesquelles les informations d'assistance du domaine temporel agissent, des informations du domaine spatial sur lesquelles les informations d'assistance du domaine temporel agissent, des informations de configuration de réception discontinue de liaison descendante, des informations de bitmap de réception de liaison descendante, des informations de configuration de transmission discontinue de liaison montante, et des informations de bitmap de transmission de liaison montante ;
les informations d'assistance du domaine fréquentiel comprennent au moins l'un des éléments suivants : des informations d'identification du domaine fréquentiel d'une fréquence perturbée et des informations d'identification du domaine fréquentiel d'une source de perturbation ;
les informations d'assistance du domaine spatial comprennent au moins l'un des éléments suivants : des informations d'identification du domaine spatial d'une fréquence perturbée et des informations d'identification du domaine spatial d'une source de perturbation ;
la technologie radio perturbée comprend au moins une technologie de deuxième génération, 2G, une technologie de troisième génération, 3G, une technologie de quatrième génération, 4G, et une technologie de cinquième génération, 5G.

8. Procédé selon l'une quelconque des revendications 1 à 7, dans lequel, l'envoi (201) des informations d'assistance à la suppression des interférences au dispositif côté réseau, comprend :
si les informations d'assistance à la suppression des interférences sont modifiées, alors envoyer les informations d'assistance à la suppression des interférences au dispositif côté réseau.

9. Procédé de traitement des interférences exécuté par un dispositif côté réseau, le procédé comprenant :
recevoir (401) des informations d'assistance à la suppression des interférences envoyées par un terminal utilisateur ; et
envoyer (402) des informations de configuration de la suppression des interférences au terminal utilisateur selon les informations d'assistance à la suppression des interférences, dans lequel les informations de configuration de la suppression des interférences comprennent au moins l'un des éléments suivants : des informations de configuration pour arrêter la transmission de liaison montante ou des informations de configuration pour arrêter la réception de liaison descendante ;
**caractérisé en ce que**,
les informations de configuration pour arrêter la transmission ascendante comprennent au moins l'un des éléments suivants : des informations du domaine spatial pour arrêter la transmission ascendante et des informations d'indication d'un canal de liaison montante dont la transmission de liaison montante est arrêtée ;
les informations de configuration pour arrêter la réception de liaison descendante comprennent au moins l'un des éléments suivants : des informations du domaine spatial pour arrêter la réception de liaison descendante et des informations d'indication d'un canal de liaison descendante dont la réception de liaison descendante est arrêtée ;
et,
les informations d'assistance à la suppression des interférences comprennent des informations d'assistance du domaine spatial.

10. Procédé selon la revendication 9, dans lequel les informations de configuration pour arrêter la transmission de liaison montante comprennent en outre au moins l'un des éléments suivants :
des informations du domaine temporel pour arrêter la transmission de liaison montante, et des informations du domaine fréquentiel pour arrêter la transmission de liaison montante ;
les informations de configuration pour arrêter la réception de liaison descendante comprennent en outre au moins l'un des éléments suivants : des informations du domaine temporel pour arrêter la réception de liaison descendante, et des informations du domaine fréquentiel pour arrêter la réception de liaison descendante.

11. Procédé selon la revendication 10, dans lequel les informations du domaine temporel pour arrêter la transmission de liaison montante comprennent au moins l'un des éléments suivants : un identifiant de créneau, un identifiant de sous-trame, un identifiant de numéro de trame système, SFN, et des informations de bitmap ;
les informations du domaine temporel pour arrêter la réception de liaison descendante comprennent au moins l'un des éléments suivants : un identifiant de créneau, un identifiant de sous-trame, un identifiant de SFN, et des informations de bitmap ;
dans lequel chaque bit des informations de bitmap dans les informations de domaine temporel pour arrêter la transmission de liaison montante ou les informations de bitmap dans les informations de domaine temporel pour arrêter la réception de liaison descendante correspondent à un index de domaine temporel, et l'index de domaine temporel comprend au moins l'un des éléments suivants : un identifiant de créneau, un identifiant de sous-trame, et un identifiant de SFN ;
les informations sur le domaine fréquentiel pour arrêter la transmission de la liaison montante comprennent au moins l'un des éléments suivants : un identificateur de fréquence, une plage de largeur de bande, un identificateur de partie de largeur de bande, BWP, un identificateur de cellule et un identificateur de groupe de cellules ;
les informations du domaine fréquentiel pour arrêter la réception de liaison descendante comprennent au moins l'un des éléments suivants : un identifiant de fréquence, une plage de largeur de bande, un identifiant de BWP, un identifiant de cellule, et un identifiant de groupe de cellules ;
les informations du domaine spatial pour arrêter la transmission de liaison montante comprennent au moins l'un des éléments suivants : un identifiant de faisceau, un identifiant de paire de faisceaux, un identifiant de bloc de signaux de synchronisation, SSB, un identifiant de signal de référence d'informations d'état de canal, CSI-RS, et un identifiant de quasi-colocalisation, QCL ;
les informations du domaine spatial pour arrêter la réception de liaison descendante comprennent au moins l'un des éléments suivants : un identifiant de faisceau, un identifiant de paire de faisceaux, un identifiant de SSB, un identifiant de CSI-RS et un identifiant de QCL ;
le canal de liaison montante dont la transmission de liaison montante est arrêtée comprend au moins l'un des éléments suivants : un canal de commande de liaison montante physique, PUCCH, un canal partagé de liaison montante physique, PUSCH, un canal d'accès aléatoire physique, PRACH, et un canal de signal de référence de sondage, SRS ;
le canal de liaison descendante dont la réception de liaison descendante est arrêtée comprend au moins un canal de commande de liaison descendante physique, PDCCH, un canal partagé de liaison descendante physique, PDSCH, et un canal de diffusion physique, PBCH.

12. Procédé selon l'une quelconque des revendications 9 à 11, dans lequel avant de recevoir (401) les informations d'assistance à la suppression des interférences envoyées par le terminal utilisateur, le procédé comprend en outre :
envoyer des informations de configuration de rapport des informations d'assistance à la suppression des interférences au terminal utilisateur.

13. Procédé selon la revendication 12, dans lequel les informations de configuration du rapport comprennent au moins l'un des éléments suivants :
des informations de configuration d'un temporisateur d'interdiction de rapport d'informations d'assistance à la suppression des interférences, et des informations de configuration indiquant si le terminal utilisateur est autorisé à rapporter les informations d'assistance à la suppression des interférences ;
et/ou,
des informations d'assistance à la suppression des interférences comprennent en outre au moins l'un des éléments suivants :
des informations d'assistance du domaine temporel, des informations d'assistance du domaine fréquentiel et des informations d'indication d'une technologie radio perturbée.

14. Terminal utilisateur, comprenant :
un module d'envoi (601), utilisé pour envoyer des informations d'assistance à la suppression des interférences à un dispositif côté réseau ;
un premier module de réception (602), utilisé pour recevoir des informations de configuration de suppression des interférences envoyées par le dispositif côté réseau selon les informations d'assistance à la suppression des interférences, dans lequel les informations de configuration de suppression des interférences comprennent au moins l'un des éléments suivants : des informations de configuration pour arrêter la transmission de liaison montante et des informations de configuration pour arrêter la réception de liaison descendante ; et
un module d'exécution (603), utilisé pour, dans le cas où des interférences se produisent, exécuter un comportement de traitement des interférences selon les informations de configuration de la suppression des interférences, dans lequel le comportement de traitement des interférences comprend au moins un élément parmi l'arrêt de la transmission de liaison montante et l'arrêt de la réception de liaison descendante ;
**caractérisé en ce que**,
les informations de configuration pour arrêter la transmission ascendante comprennent au moins l'un des éléments suivants : des informations du domaine spatial pour arrêter la transmission ascendante et des informations d'indication d'un canal de liaison montante dont la transmission de liaison montante est arrêtée ;
les informations de configuration pour arrêter la réception de liaison descendante comprennent au moins l'un des éléments suivants : des informations du domaine spatial pour arrêter la réception de liaison descendante et des informations d'indication d'un canal de liaison descendante dont la réception de liaison descendante est arrêtée ;
et,
les informations d'assistance à la suppression des interférences comprennent des informations d'assistance du domaine spatial.

15. Dispositif côté réseau, comprenant :
un module de réception (901), utilisé pour recevoir des informations d'assistance à la suppression des interférences envoyées par un terminal utilisateur ; et
un premier module d'envoi (902), utilisé pour envoyer des informations de configuration de la suppression des interférences au terminal utilisateur selon les informations d'assistance à la suppression des interférences, dans lequel, les informations de configuration de la suppression des interférences comprennent au moins l'un des éléments suivants : des informations de configuration pour arrêter la transmission de liaison montante et des informations de configuration pour arrêter la réception de liaison descendante ;
**caractérisé en ce que**,
les informations de configuration pour arrêter la transmission ascendante comprennent au moins l'un des éléments suivants : des informations du domaine spatial pour arrêter la transmission ascendante et des informations d'indication d'un canal de liaison montante dont la transmission de liaison montante est arrêtée ;
les informations de configuration pour arrêter la réception de liaison descendante comprennent au moins l'un des éléments suivants : des informations du domaine spatial pour arrêter la réception de liaison descendante et des informations d'indication d'un canal de liaison descendante dont la réception de liaison descendante est arrêtée ;
et,
les informations d'assistance à la suppression des interférences comprennent des informations d'assistance du domaine spatial.
